(19) Europäisches Patentamt
European Patent Office
Office européen des brevets

(11) **EP 3 617 815 B1**

(12) **EUROPEAN PATENT SPECIFICATION**

(45) Date of publication and mention
of the grant of the patent:
**24.03.2021 Bulletin 2021/12**

(51) Int Cl.:
**G05B 13/04** *(2006.01)*          **G09B 19/00** *(2006.01)*
**G05B 19/042** *(2006.01)*

(21) Application number: **19185447.0**

(22) Date of filing: **10.07.2019**

(54) **WORK SUPPORT DEVICE, WORK SUPPORT METHOD, AND WORK SUPPORT PROGRAM**

ARBEITSUNTERSTÜTZUNGSVORRICHTUNG, ARBEITSUNTERSTÜTZUNGSVERFAHREN UND ARBEITSUNTERSTÜTZUNGSPROGRAMM

DISPOSITIF, PROCÉDÉ ET PROGRAMME DE SUPPORT DE TRAVAIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.08.2018 JP 2018163161**

(43) Date of publication of application:
**04.03.2020 Bulletin 2020/10**

(73) Proprietor: **OMRON Corporation
Shiokoji-dori, Shimogyo-ku
Kyoto-shi
Kyoto 600-8530 (JP)**

(72) Inventors:
• **Mori, Yoshikazu**
  **Kizugawa-shi, Kyoto 619-0283 (JP)**
• **Kataoka, Hirotaka**
  **Kizugawa-shi, Kyoto 619-0283 (JP)**
• **Kotake, Yasuyo**
  **Kizugawa-shi, Kyoto 619-0283 (JP)**

(74) Representative: **Hoffmann Eitle
Patent- und Rechtsanwälte PartmbB
Arabellastraße 30
81925 München (DE)**

(56) References cited:
**EP-A2- 2 409 286          JP-A- 2018 132 556
US-A1- 2010 332 008      US-A1- 2017 061 817**

**Description**

FIELD

The present invention relates to a work support device, a work support method, and a work support program.

BACKGROUND

The productivity of a production site may be systematically improved or maintained if it is possible to objectively and quantitatively evaluate the skill level of a worker and thus efficiently improve the worker's skill level with respect to a work step at the production site. In recent years, a technique for evaluating the skill level of a worker using data obtained from various sensors has been developed to systematically improve or maintain the productivity of a production site. For example, Patent Documents 1 and 2 propose a skill evaluation system for evaluating the skill level of a worker with respect to a work step.

Specifically, the system proposed by Patent Document 1 detects behavioral data and work state data by measuring a work state using sensors such as a CCD camera, a gyroscope sensor, an acceleration sensor, a motion sensor, and a temperature sensor. Then, the system extracts a meaningful pattern particular to a worker from the behavioral data and the work state data and compares the extracted pattern with a preliminarily-constructed model data pattern. The system can objectively evaluate the skill level of a worker on the basis of the results of the comparison.

The system proposed by Patent Document 2 obtains data in accordance with the movement of a model operator and a user using sensors such as a camera, an acceleration sensor, a gyroscope sensor, and a magnetic field sensor and graphs the data obtained on the movement on a time axis. Then, the system adjusts each graph so that the time axes of the graphs coincide at a predetermined work point; establishes a tolerable range of data for the user on the now-adjusted graph for the movement of the model operator; and detects a section deviating from the tolerable range of data on the graph adjusted for the movement of the user. This makes it possible to visualize a time section in which a user moves significantly differently from the movement of a model operator.

Document EP 2 409 286 discloses a system and method for quantifying clinical skill of a user, comprising: collecting data relating to a surgical task done by a user using a surgical device; comparing the data for the surgical task to other data for another similar surgical task; quantifying the clinical skill of the user based on the comparing of the data for the surgical task to the other data for the other similar surgical task; outputting the clinical skill of the user. JP 2018132556 pertains a worker growing device. Document US 2017/0061817 discloses a movement augmentation system.

Related Art Documents

Patent Documents

[Patent Document 1] Japanese Patent Publication No. 2006-171184
[Patent Document 2] Japanese Patent Publication No. 2013-088730

SUMMARY

Technical Problem

Existing systems such as those described in Patent Documents 1 and 2 make it possible to improve the skill level of a worker by objectively evaluating the skill level of the worker and helping the lower-skilled worker to learn the movement of a model worker. This makes it possible to systematically improve or maintain the productivity of a production site. However, the inventors found that the above-mentioned conventional systems have the following problems.

For example, consider a first target operator who is very low-skilled and has almost no experience with a work step, and a second target operator who is intermediately skilled and is nearly able to suitably accomplish the work step. Existing systems do not consider the process of a worker learning a work step. That is, existing systems train the first target operator and the second target operator identically on the basis of the data from the same model operator for improving their movements. However, given the skill level of a target operator subjected to training for improving the movement significantly lower than the skill level of a model operator, the target operator is unlikely to master the movement of the model operator in a short time even though the target operator is trained to learn the movement of the model operator. Thus, inventors also found that conventional systems encounter problems in efficiently improving the skill level of a target operator. These problems can occur not only when improving or maintaining the productivity and the efficiency at the production site as described above, but on any occasion when a person masters a work step of some kind.

Embodiments of the present invention aim to address the aforementioned circumstances through techniques for objectively evaluating the skill level of a target operator with respect to a work step and for allowing said target operator to learn the work efficiently.

Solution to Problem

To address the above described disadvantages, the present invention is configured as follows.

According to the present invention a work support device according to claim 1 is provided.

The work support device according to the aforementioned configuration use one or a plurality of sensors to measure the movement of the target operator performing a work step and evaluates the skill level of the target operator by analyzing the movement data acquired. Next, the work support device according to the configuration acquires the movement data of a model operator at a skill level slightly higher than or equal to the skill level calculated for the target operator by accessing a database that stores the movement data of the model operator for each skill level, the movement data acquired throughout the process of a model operator achieving the skill level at which the model operator can suitably accomplish the work step. The term "slightly higher" signifies that the skill level of a model operator is higher than the skill level of a target operator and the difference between the skill level of the model operator and the skill level of the target operator is within a predetermined range. The predetermined range may be determined as appropriate. The expression "can suitably accomplish the work step" signifies the ability to complete the target work step 40 to at a standard quality within a standard time. The work support device according to the configuration compares the acquired movement data of the model operator with the movement data of the target operator and determines an instruction that helps the movement of the target operator to approach the movement of the model operator with respect to the work.

That is, the work support device according to the configuration has a database in which the movement data of the model operator is stored mapped to a skill level. The work support device according to the configuration uses the movement data of the model operator with a skill level that is close to the skill level of the target operator as the model data of the movements to be acquired by the target operator, instead of the movement data for a model operator with a skill level significantly deviated from the skill level of the target operator. This makes it possible to use movement data suitable for the skill level of the target operator as a model. Thereby, the target operator can learn a work efficiently. Further, the present configuration derives a skill level from objectively acquired movement data. Thus, it is possible to evaluate the skill level of a target operator objectively with respect to a work. Therefore, the work support device according to the present configuration can evaluate the skill level of a target operator objectively with respect to a work and can allow the target operator to learn the work efficiently.

The type of movement data does not need to be specifically defined as long as the same relates to a movement, and can be selected as appropriate in accordance with the form of implementation. The type of sensor does not need to be specifically defined as long as the device can measure a physiological parameter associated with the movement of the target operator; the type of sensor can be selected as appropriate in accordance with the form of implementation. For example, the movement data may be acquired by observing a body movement, an electroencephalogram, a cerebral blood flow, a pupil diameter, a gaze direction, an electrocardiogram, an electromyogram, a galvanic skin reflex (GSR) and so forth. Further, for example, a sensor may be used as a camera, a motion capture, a load cell, an electroencephalograph (EEG), a magnetoencephalography (MEG), a magnetic resonance imaging (MRI) configured to capture a blood flow associated with a brain activity using the functional magnetic resonance imaging (fMRI), a brain activity measuring device configured to measure a brain blood flow using the functional near infrared spectroscopy (fNIRS), a gaze sensor configured to measure a pupil diameter and a gaze direction, an electrooculography sensor, an electrocardiograph, an electromyograph, or a combination of these devices.

The first acquisition unit in the work support device according to the above-mentioned aspect may acquire other movement data generated using the one or plurality of sensors to measure the movement of the target operator performing the work step after the output unit outputs the information associated with the instruction. The work support device according to the above-mentioned aspect may be further provided with a skills acquisition determination unit that analyzes other movement data acquired and determines whether or not the target operator learned the movement with respect to the work step in accordance with the instruction. The output unit may repeat the output of the information associated with the instruction until the skills acquisition determination unit determines that the target operator learned the movement with respect to the work step in accordance with the instruction. According to the configuration, it is possible to monitor the learning level of the target operator with respect to a work step and guide the target operator until the target operator can perform the work step suitably.

The movement data in the work support device according to the above-mentioned aspect may be made up of a plurality of feature amounts associated with the movements with respect to the work step. The instruction determination unit may identify one or a plurality of feature amounts exhibiting a major difference between the target operator and the model operator on the basis of the results of comparison; and determines the instruction in accordance with the difference between the target operator and the model operator in each one or the plurality of feature amounts identified. According to the present configuration, the instruction can be determined as appropriate for allowing the target operator to learn a work efficiently.

The work step in the work support device according to the above-mentioned aspect may include a plurality of basic operations. The instruction determination unit compares the movement data of the model operator and the movement data of the target operator for each basic operation, and may determine the instruction for at least one of the plurality of basic operations on the basis of the result of comparison. According to the present configuration, the instruction can be determined as appropriate for allowing the target operator to learn a work efficiently.

The basic operations in the work support device according to the above-mentioned aspect may be defined to include at least one cycle of human cognitive information processing. The first acquisition unit may acquire the movement data generated by using the plurality of sensors to measure a sensory activity and a physical activity of the target operator. The analysis of the movement data may include the evaluation of at least one of the correctness, speed, stability, and the rhythm in performing the basic operations. The level calculation unit may calculate the skill level in accordance with the results of evaluation. According to the present configuration, the skill level of a target operator with respect to a work can be evaluated objectively and correctly.

The skill-level calculation unit in the work support device according to the above-mentioned aspect may calculate a performance index for each basic operation in accordance with the results of evaluation or may calculate the skill level by adding together the performance indexes for the basic operations. According to the present configuration, the skill level of a target operator with respect to a work can be evaluated objectively and correctly.

The work support device according to the above-mentioned aspect may establish a reference value for the performance index with respect to each basic operation in accordance with the difficulty of the sensory activity and the physical activity; and the skill-level calculation unit may calculate the performance index with respect to each basic operation from the reference value by comparing the behavior of the target operator with a preliminarily-constructed model behavior and in accordance with the degree of evaluation for the performance of each basic operation of the target operator.. According to the present configuration, the skill level of a target operator with respect to a work can be evaluated objectively and correctly.

The skill-level calculation unit in the work support device according to the above-mentioned aspect analyzes the movement data to measure the actual period from start to finish of the work step, and may calculate the skill level in accordance with the ratio of the measured actual period to the predetermined standard period. According to the present configuration, the skill level of a target operator with respect to a work can be evaluated objectively and simply.

The second acquisition unit in the work support device according to the above-mentioned aspect may acquire the average movement data generated by averaging the movement data of a plurality of skilled operators capable of suitably accomplishing the work step as the movement data of the model operator. According to the present configuration, the work support device can suitably acquire the movement data of a model operator; this movement data can be used as model data that allows a target operator to acquire a series of movements included in the work step, thereby allowing the target operator to learn the work efficiently.

The database in the work support device according to the above-mentioned aspect may store a plurality of pieces of movement data each corresponding to a skilled operator among a plurality of skilled operators capable of suitably accomplishing the work step as the movement data of the model operator. The second acquisition unit may select the movement data of any one of the skilled operators from the plurality of pieces of movement data stored in the database and acquire the selected movement data of the skilled operator as the movement data of the model operator. According to the present configuration, the work support device can suitably acquire the movement data of a model operator; this movement data can be used as model data that allows a target operator to acquire a series of movements included in the work step, thereby allowing the target operator to learn the work efficiently.

The second acquisition unit in the work support device according to the above-mentioned aspect may select the movement data of the skilled operator spending the least time achieving the skill level for suitably accomplishing the work step. According to the present configuration, the work support device can suitably acquire the movement data of a model operator; this movement data can be used as model data that allows a target operator to acquire a series of movements included in the work step, thereby allowing the target operator to learn the work efficiently.

The second acquisition unit in the work support device according to the above-mentioned aspect may select the movement data of a skilled operator similar in movement to the target operator. According to the present configuration, the work support device can suitably acquire the movement data of a model operator; this movement data can be used as model data that allows a target operator to acquire a series of movements included in the work step, thereby allowing the target operator to learn the work efficiently.

The second acquisition unit in the work support device according to the above-mentioned aspect may select the skilled operator whose movement data is most frequently referenced from among the plurality of movement data stored in the database. According to the present configuration, the work support device can suitably acquire the movement data of a model operator; this movement data can be used as model data that allows a target operator to acquire a series of movements included in the work step, thereby allowing the target operator to learn the work efficiently.

As another implementation of the work support device according to the invention, one aspect of the present invention is an information processing method or a program that implements the above configuration, or a computer readable recording medium that stores such a program. The computer readable recording medium may be a medium whereon the information for the program or the like is accumulated via electrical, magnetic, optical, mechanical, or chemical processes so that a computer, another device, or a machine is capable of reading the information recorded in the program or the like.

According to the present invention a work support method according to claim 14 is provided.

According to the present invention a work support program according to claim 15 is provided.

Effects

According to the present invention, it is possible to objectively evaluate the skill level of a target operator with respect to a work step and to provide the target operator with a method for the target operator to efficiently learn the work step.

BRIEF DESCRIPTION OF THE DRAWINGS

FIG. 1 schematically illustrates an example of a setting where the present invention may be adopted;
FIG. 2 illustrates the relationship between the skill level of a target operator and data used for guidance;
FIG. 3 schematically illustrates an example of a hardware configuration of a work support device according to an embodiment;
FIG. 4 schematically illustrates an example of a hardware configuration of a work support device according to an embodiment;
FIG. 5A illustrates an example of processing sequence for a work support device according to an embodiment;
FIG. 5B illustrates an example of processing sequence for a work support device according to an embodiment;
FIG. 6 schematically illustrates an example of a plurality of basic operations making up a work step;
FIG. 7 schematically illustrates an example of movement data for a target operator according to an embodiment;
FIG. 8 schematically illustrates an example of a learning process database according to an embodiment;
FIG. 9A schematically illustrates an example of movement data for a model operator according to an embodiment;
FIG. 9B schematically illustrates an example of movement data for a model operator according to an embodiment;
FIG. 9C schematically illustrates an example of movement data for a model operator according to an embodiment;
FIG. 9D schematically illustrates an example of movement data for a model operator according to an embodiment;
FIG. 10 schematically illustrates an example of an instruction database according to an embodiment;
FIG. 11 schematically illustrates an example of information output from a work support device according to an embodiment;
FIG. 12 illustrates an example of a processing sequence while determining skill acquisition pertaining to an instruction in a work support device according to an embodiment;
FIG. 13 schematically illustrates another example in a situation where the present invention may be adopted;
FIG. 14 schematically illustrates a process in human cognitive information processing;
FIG. 15 schematically illustrates an example of a process of mastering a work step;
FIG. 16A schematically illustrates an example of a method for evaluating the correctness of an execution of a basic operation;
FIG. 16B schematically illustrates an example of a method for evaluating the stability of an execution of a basic operation;
FIG. 16C schematically illustrates an example of a method for evaluating the speed of an execution of a basic operation;
FIG. 16D schematically illustrates an example of a method for evaluating the rhythm in an execution of a basic operation;
FIG. 17A illustrates an example of the relationship between the difficulty level of a sensory activity and a reference value for a performance index; and
FIG. 17B illustrates an example of the relationship between the difficulty level of a physical activity and a reference value for a performance index.

DETAILED DESCRIPTION

An embodiment (below, "the embodiment") according to an aspect of the invention is described below on the basis of the drawings. However, at all points the embodiment described below is merely an example of the invention. It goes without saying that various modifications and variations are possible. That is, specific configurations may be adopted as appropriate in accordance with the embodiment when implementing the invention. Note that the data that appears in the embodiment is described in natural language; however, these descriptions point to virtual languages, commands, parameters, machine language and the like that may be recognized by a computer.

§ 1 Example Application

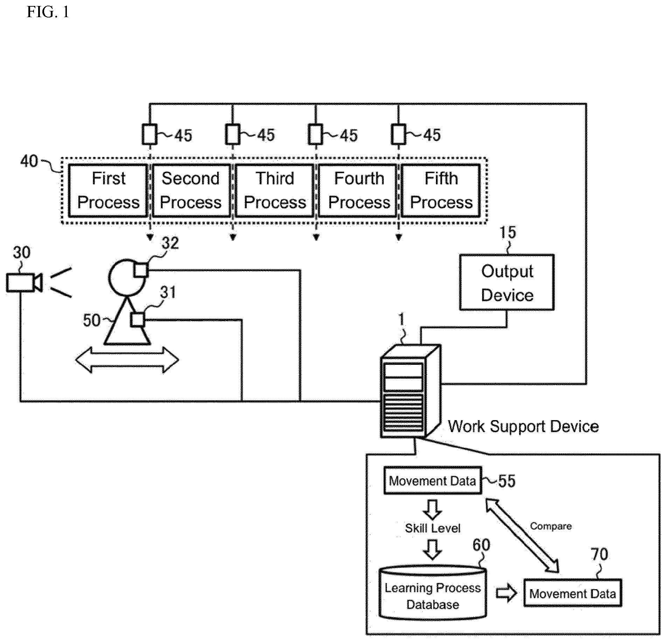

First, an example of where the present invention may be adopted is described using FIG. 1. FIG. 1 schematically illustrates an example of a setting where a work support device 1 according to this embodiment may be adopted. In the example shown in FIG. 1, the task allocated to a target operator 50 includes five processes consisting of a first through fifth process with the workspaces for accomplishing a work step 40 in each process arranged in series. Each work step 40 represents, for example, insertion of parts, soldering, fitting of cases, inspection, packaging and so forth. The target operator 50 moves to each workspace to accomplish the work step 40 in each process. When completing the work step 40 in the fifth process, the target operator 50 returns to the workspace for the first process to accomplish the work step 40 in each process again from the beginning.

The target operator 50 is a worker subject to guidance on improving movement with respect to the work step 40 in each process on a production line. Infrared sensors 45 are provided in between each workspace. The work support device 1 can identify the workspace in which the target operator is present, that is, the process in which the target operator 50 is performing the work step 40 on the basis of the results of detection of each infrared sensor 45. However, the type and the number of the work steps 40 allocated to the target operator 50 may not be limited to these examples, and may be selected as appropriate in accordance with the form of implementation.

The work support device 1 according to this embodiment acquires movement data 55 generated by measuring the movement of the target operator 50 performing the work step 40 using one or a plurality of sensors. The sensors are not specifically limited as long as the movement of the target operator 50 can be detected, and may be selected as appropriate in accordance with the form of implementation. Further, the number of the sensors is not specifically limited, and may be selected as appropriate in accordance with the form of implementation. In this embodiment, a camera 30, a load cell 31, and an electrooculography sensor 32 are used as the examples of the sensors. The camera 30 measures the motion of the target operator 50. The load cell 31 measures a force acting on the hand of the target operator 50. The electrooculography sensor 32 measures the gaze direction (point of gaze) of the target operator 50. The work support device 1 according to this embodiment acquires movement data 55 generated by these measurements. Next, the work support device 1 calculates the skill level of the target operator 50 with respect to the work step 40 by analyzing the movement data 55 acquired.

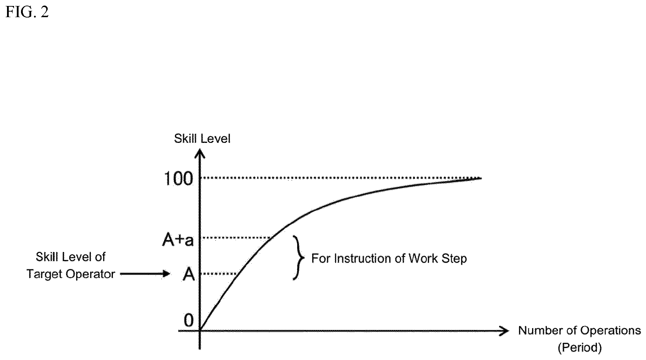

Here, the relationship between the skill level and the learning process before achieving proficiency in suitably accomplishing a work step is described using FIG. 2. FIG. 2 illustrates the relationship between the learning process and the skill level. The skill level indicates a degree on a spectrum of whether or not the target operator can perform the work step 40 suitably. The expression "can suitably accomplish the work step 40" signifies the ability to complete the target work step 40 to at a standard quality within a standard time. As shown in FIG. 2, generally, the more frequently a worker repeats a target work step, the more reliably the worker can master the movements to suitably complete the work step. That is, the skill level improves with the number of operations (or period). The worker who repeats a work step a sufficient number of times (period) may achieve a proficiency comparable to a skilled operator capable of completing the work to meet a standard quality within a standard period; this worker can become a model operator for other workers having difficulty in suitably accomplishing the work.

According to this embodiment, a learning process database 60 stores the movement data of a model operator at each time during the process. That is, the learning process database 60 stores the movement data of a model operator at each skill level; the movement data is acquired throughout the process of learning up to the model operator achieving proficiency in suitably accomplishing the work step 40. The learning process database 60 is an example of a database in the present invention. As shown in FIG. 2, skill levels are represented by the numbers from "0" to "100." However, the representation of skill levels is not limited to such an example, and may be determined as appropriate in accordance with the form of implementation.

The work support device 1 according to this embodiment acquires movement data 70 of a model operator at a skill level slightly higher than or equal to the skill level calculated for the target operator 50 by accessing the learning process database 60. The term "slightly higher" signifies that the skill level of the model operator is higher than the skill level of the target operator 50 and that the difference between the skill level of the model operator and the skill level of the target operator 50 is within a predetermined range. As shown in FIG. 2, assume that the skill level of the target operator 50 is "A." In this situation, the work support device 1 acquires the movement data 70 of the model operator that corresponds to the skill level within the range of "A" to "A + a." Here, "a" corresponds to the predetermined range.

The work support device 1 according to this embodiment may teach the work step 40 using the acquired movement data 70. Specifically, the work support device 1 compares the acquired movement data 70 of the model operator with the movement data 55 of the target operator 50. Next, the work support device 1 determines an instruction that allows the movement of the target operator 50 to approach the movement of the model operator with respect to the work step 40. Then, the work support device 1 outputs information associated with the instruction determined. As an example of output processing, the work support device 1 may display the instruction on an output device 15.

As described above, according to this embodiment, the movement data 70 of a model operator at a skill level close to the skill level of the target operator 50 (A to A + a in FIG. 2) is used as the model data for the movement to be mastered by the target operator 50 instead of the movement data for a model operator at a skill level significantly deviated from the skill level of the target operator 50. Thereby, the movement data 70 suitable for the skill level of the target operator 50 can be used as model data. Thus, it is possible to allow the target operator 50 to learn the work step 40 efficiently by pursuing the process through which the model operator mastered the work step 40. The skill level of the target operator 50 is derived from the movement data 55 that is objectively acquired. This allows the skill level of the target operator 50 to be evaluated objectively with respect to the work step 40. Therefore, the work support device 1 according to this embodiment allows objective evaluation of the skill level of the target operator 50 with respect to the work step 40 and facilitates the target operator 50 in efficiently mastering the work step 40.

2. Example Configuration

Hardware Configuration

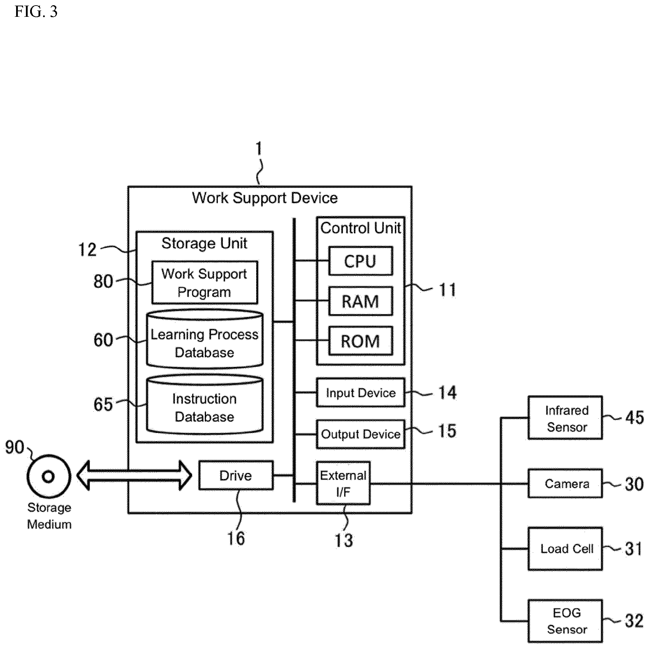

Next, an example of the hardware configuration for the work support device 1 according to this embodiment is described using FIG. 3. FIG. 3 schematically illustrates an example of a hardware configuration of the work support device 1 according this embodiment.

As shown in FIG. 3, the work support device 1 according to this embodiment is a computer, which electrically connects a control unit 11, a storage unit 12, an external interface 13, an input device 14, an output device 15, and a drive 16. Additionally, FIG. 3 denotes the external interface as "external I / F."

The control unit 11 may include a central processing unit (CPU), a random access memory (RAM), a read only memory (ROM) and so forth, and is configured to execute information processing on the basis of a program and various types of data. The storage unit 12 is an example of memory, and made up of, for example, a hard disk drive, a solid state device or the like. According to this embodiment, the storage unit 12 stores various types of information such as a work support program 80, a learning process database 60, and an instruction database 65.

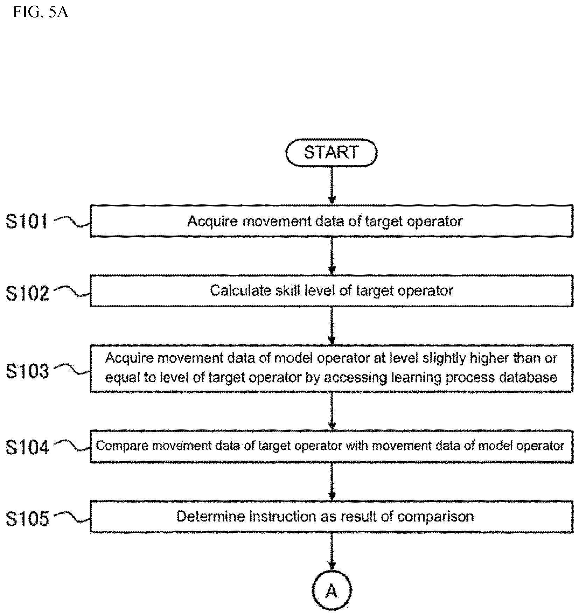

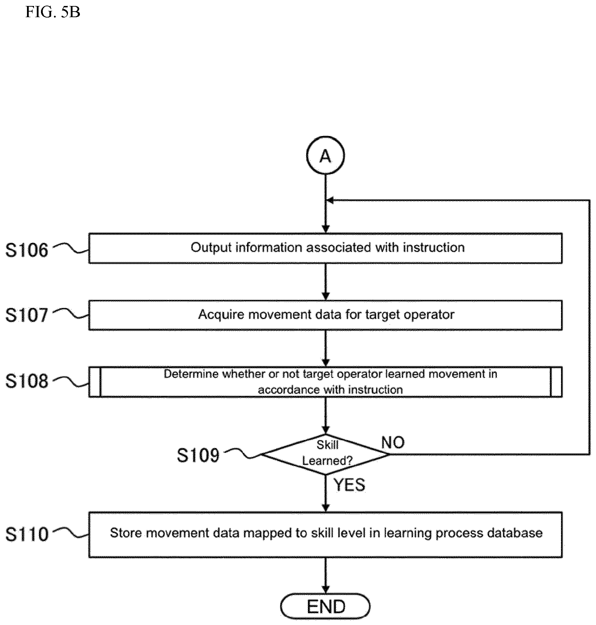

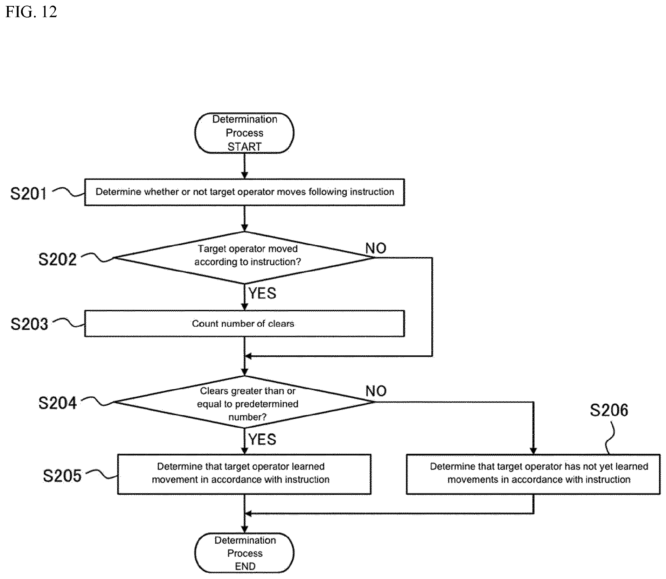

The work support program 80 allows the work support device 1 to execute the information processing (FIG. 5A, FIG. 5B, and FIG. 12) for supporting the target operator 50 in mastering the work step 40. The work support program 80 includes a series of commands for executing the information processing. The learning process database 60 stores the movement data of a model operator acquired up to the model operator achieving proficiency in suitably accomplishing the work step 40; the movement data is stored in the database 60 mapped to the corresponding skill level. The instruction database 65 stores a template for the instruction which is presented to the target operator 50. The details are described later.

The external interface 13 includes, for example, a universal serial bus (USB) port, a dedicated port or the like and serves as an interface to connect external devices. The type and number of the external interfaces 13 may be selected as appropriate in accordance with the type and number of connected external devices. The work support device 1 according to this embodiment is connected to a camera 30, a load cell 31, an electrooculography sensor 32, and an infrared sensor 45 through the external interface 13.

The camera 30, the load cell 31, and the electrooculography sensor 32 are used to measure the movement of the target operator 50. The camera 30 is placed to capture the body of the target operator 50 and is used to measure the motion of the target operator 50. For this purpose, the target operator may wear a marker for measuring a motion. The load cell 31 is mounted on, for example, the hand of the target operator 50 and is used to measure a force acting on the hand. The electrooculography sensor 32 is placed near the eyes of the target operator 50 and is used to measure the gazing direction (point of gaze) of the target operator 50. According to this embodiment, the work support device 1 can acquire movement data 55 from these sensors.

The infrared sensor 45 is used to identify the work step 40 being performed by the target operator 50. As shown in FIG. 1, tasks allocated to the target operator 50 includes first to fifth processes in this embodiment, and workspaces for each process are aligned in a single direction. Each infrared sensor 45 is placed in between each workspace, and is configured to detect passing between each workspace. The work support device 1 identifies the workspace where the target operator 50 is present, that is, the process being performed by the target operator 50 on the basis of the detection results of each infrared sensor 45. The type and number of sensors connected to the external interface 13 are not limited to such an example, and may be selected as appropriate in accordance with the form of implementation.

The input device 14 includes, for example, a mouse, a keyboard or the like. The output device 15 includes, for example, a display, a speaker or the like. An operator may operate the work support device 1 using the input device 14 and the output device 15. An operator may be the target operator 50 or a supervisor who supervises the target operator 50.

The drive 16 is, for example, a compact disc (CD) drive, a DVD drive or the like, which is used to read a program stored in a storage medium 90. The type of the drive 16 may be selected as appropriate in accordance with the type of the storage medium 90. at least one of the work support program 80, the learning process database 60, and the instruction database 65 may be stored in the storage medium 90.

The storage medium 90 stores information such as the program by electrical, magnetical, optical, mechanical, or chemical action in such manner that a computer or other devices can read the stored information such as the program. The work support device 1 may acquire at least one of the work support program 80, the learning process database 60, and the instruction database 65 from this storage medium 90.

Here, FIG. 3 illustrates a disc type storage medium such as CD and DVD as an example of the storage medium 90. However, the type of the storage medium 90 is not limited to the disc type, and may be a type other than the disc type. As a storage medium other than the disc type, for example, a semiconductor memory such as a flash memory may be used.

The specific hardware configuration of the work support device 1 may allow the omission, replacement, and addition as appropriate in accordance with the form of implementation. For example, the control unit 11 may include a plurality of hardware processors. A hardware processor may be configured from a microprocessor, a field-programmable gate array (FPGA), or the like. The storage unit 12 may be configured from the RAM and ROM included in the control unit 11. At least one of the external interface 13, input device 14, output device 15, and drive 16 may be omitted. Any one of the external interface 13, input device 14, output device 15, and drive 16 may be omitted. The work support device 1 may include a communication interface that connects to an external device via a network to provide data communication therewith. When the camera 30, the load cell 31, the electrooculography sensor 32, and each infrared sensor 45 have a communication interface, the work support device 1 may be connected to the load cell 31, the electrooculography sensor 32, and each infrared sensor 45 via a network. The work support device 1 may be configured from a plurality of computers. The work support device 1 may be made up of a plurality of computers. In this case, the hardware configuration of the computers may be identical or may be different. The work support device 1 may be an information processing device designed exclusively for providing a service; beyond this the work support device 1 may be a general purpose server device, a personal computer (PC) or the like.

Software Configuration

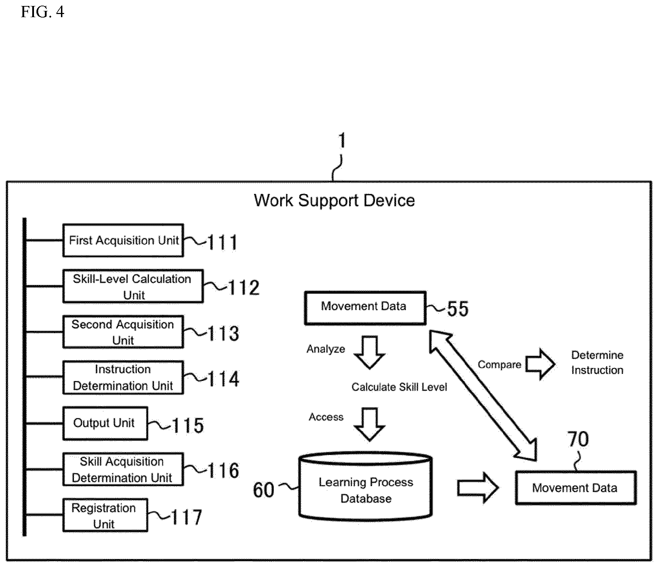

Next, an example of the software configuration for the work support device 1 according to the embodiment is described using FIG. 4. FIG. 4 schematically illustrates an example of a software configuration for the work support device 1 according to this embodiment.

The control unit 11 develops the work support program 80 stored in the storage memory 12 in the RAM. The control unit 11 then causes the CPU to interpret and execute the work support program 80 developed in the RAM and controls each component on the basis of a series of commands included in the work support program 80. Thereby, the work support device 1 according to this embodiment operates as a computer equipped with software modules such as a first acquisition unit 111, a level calculation unit 112. a second acquisition unit 113, an instruction determination unit 114, an output unit 115, a skills acquisition determination unit 116, and a registration unit 117 as shown in FIG. 4. That is, according to this embodiment, each software module is achieved by the control unit (CPU).

The first acquisition unit 111 acquires the movement data 55 generated by using a plurality of sensors to measure the movement of the target operator 50 performing the work step 40. The level calculation unit 112 calculate the skill level of the target operator 50 with respect to the work step 40 by analyzing the movement data 55 acquired. The skill level indicates a degree on a spectrum of whether or not the target operator can perform the work step 40 suitably. The second acquisition unit 113 accesses the learning process database 60 that stores the movement data of a model operator acquired in the process of the model operator achieving proficiency in suitably accomplishing the work step 40 at each skill level; the second acquisition unit 113 also acquires the movement data 70 of the model operator at a skill level slightly higher than or equal to the skill level calculated for the target operator. The instruction determination unit 114 compares the movement data 70 acquired for the model operator and the movement data 55 of the target operator 50, and determines an instruction that allows the movement of the target operator 50 to approach the movement of the model operator with respect to the work step 40. The output unit 115 outputs information associated with the instruction determined.

After the output unit 115 outputs information associated with the instruction, the first acquisition unit 111 may use the plurality of sensors to acquire other movement data generated by measuring the movement of the target operator

50 performing the work step 40. The skills acquisition determination unit 116 analyzes other data acquired and determines whether or not the target operator 50 acquires the movement for the work step 40 in accordance with the instruction. The output unit 115 may repeat the output of information associated with the instruction until the skills acquisition determination unit 116 determines that the target operator 50 learned the movement for the work step 40 in accordance with the instruction. The registration unit 117 stores the movement data of the target operator 50 in the learning process database 60; the aforementioned movement data is acquired in the process of the target operator 50 achieving proficiency in suitably accomplishing the work step 40. The registration unit 117 maps the movement data to the skill level.

Each software module in the work support device 1 is detailed in the operation example described later. An example of using a general purpose CPU to implement all the software modules in the work support device 1 according to this embodiment is described. However, the above-described software modules may be implemented in whole or in part by one or a plurality of dedicated processors. The software configuration in the work support device 1 may have software modules omitted, replaced, or added as appropriate in accordance with the form of implementation.

§ 3 Operation Example

Next, the operation example of the work support device 1 is described using FIGS. 5A and 5B. FIGS. 5A and 5B are flowcharts showing one example of the processing sequence in the work support device 1 according to this embodiment. The processing sequence described below is one example of "work support method" according to the present invention. However, the processing sequence described below is merely one example and each processing may be subject to change wherever possible. Further, the processing sequence described below may allow the omission of steps, replacement, and addition as appropriate in accordance with the form of implementation.

Step S102

In step S101, the control unit 11 operates as the first acquisition unit 111, which acquires the movement data 55 generated by measuring the movement of the target operator 50 performing the work step 40 using one or a plurality of sensors.

(A) Configuration of a Work Step

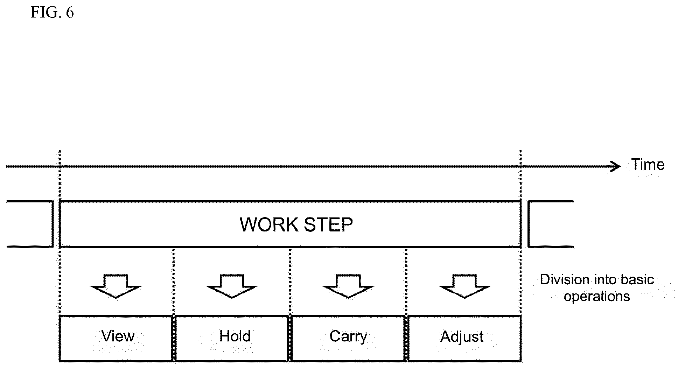

First, a configuration of the work step 40 according to this embodiment is described using FIG. 6. FIG. 6 schematically illustrates an example of the configuration of the work step 40 according to this embodiment. As shown in FIG. 6, this embodiment describes the work step 40 as including a plurality of basic operations. According to the example in FIG. 6, the work step 40 is divided into four types of basic operations including "View", "Hold", "Carry", and "Adjust." In the example, the basic operations of "View", "Hold", "Carry", and "Adjust" are aligned in that order in a time series (along a time axis).

"View" is primarily the activity of recognizing the attributes of an object in the work step 40. "Hold" is primarily the activity of holding the object in the work step 40 on the basis of the results of "View". "Carry" is primarily the activity of carrying the object in the work step 40 on the basis of the results of "Hold". "Adjust" is primarily the activity of changing the condition of the object subsequent to "Carry " to a target condition.

A work step 40 in each process included in the production line may be expressed by a combination of the four basic operations described above. As a specific example, assume a setting where a target operator 50 performs soldering. In this case, "View" involves performing spatial recognition and shape recognition of the soldering iron and the object to be soldered; "Hold" means to hold the soldering iron; "Carry", means to carry the soldering iron to the object; and "Adjust" means changing the position and angle of the soldering iron. This series of basic operations may allow the target operator 50 to accomplish soldering.

Tasks besides those that include soldering in a process on the production line and work steps other than those in those tasks may be expressed by a combination of the above-described four basic operations. However, the type, number, combination, and sequence of the basic operations are not particularly limited to these examples and may be established as appropriate in accordance with the form of implementation. For example, a sequence of basic operations may be defined where "View" is performed after "Adjust". The process for performing work step 40 can be expressed by combining basic operations with the work step 40 divided into a plurality of basic operations, and this makes it possible to evaluate the movement of the target operator 50 in the process of performing the work step 40.

(B) Data Format of Movement Data

Next, the data format of the movement data 55 according to this embodiment is described. According to this embodiment, the control unit 11 acquires movement data 55 that allows evaluation of the movement in each of the above basic operations. Specifically, the work support device 1 according to this embodiment is connected to the camera 30, the load cell 31, and the electrooculography sensor 32 through the external interface 13. In this setting, the control unit 11 acquires the movement data 55 from the camera 30, the load cell 31, and the electrooculography sensor 32. That is, unprocessed movement data 55 includes image data, measurement data on force, and measurement data on eye potential. The movement data may be raw data acquired from these sensors or data acquired by processing the raw data. According to this embodiment, the control unit 11 acquires movement data 55 configured from a plurality of feature amounts associated with the movement with respect to basic operations included in the work step 40 by processing the raw data acquired from each sensor as shown below.

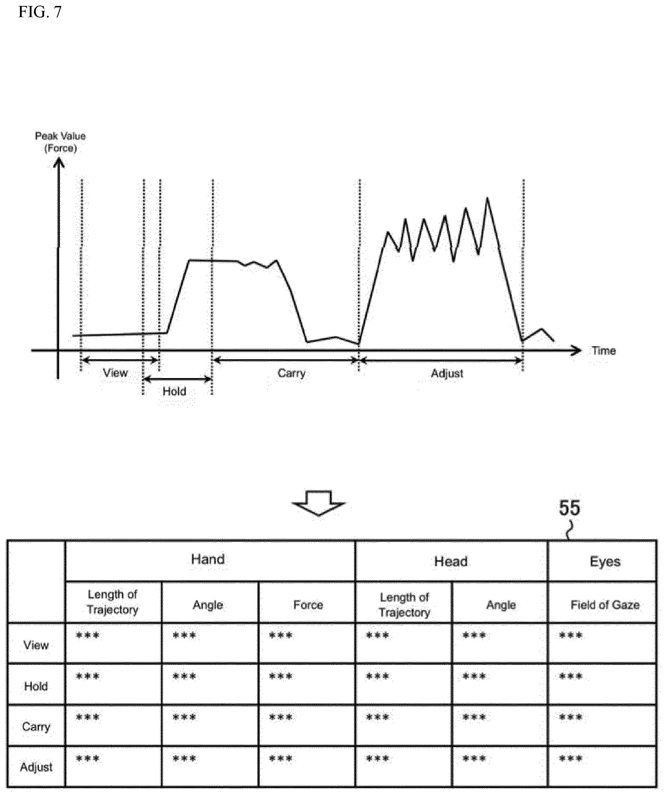

FIG. 7 schematically illustrates an example of a process for acquiring the movement data 55 according to this embodiment. As illustrated in FIG. 7, first, the control unit 11 converts the raw data acquired from each sensor to time series feature data. This conversion may be performed by adopting a publicly known method as appropriate. As an example of conversion, the control unit 11 divide the raw data into a plurality of frames by segmenting the raw data for each fixed section. This process of frame separation may be omitted unless necessary. Next, the control unit 11 calculates feature amounts in each frame by applying appropriate arithmetic processing to segment data in each frame. The feature amounts may be, for example, an amplitude, maximum value (peak value), minimum value, average value, variance, standard deviation, and instantaneous in a frame for measured values of a force, motion, and gazing direction and so forth. The feature amounts may be expressed by a probability distribution over time series. The control unit plots calculated feature amounts in time series. This series of processing allows the control unit 11 to convert the raw data acquired from each sensor to time series feature data. FIG. 7 shows an example of converting the raw data acquired from the load cell 31 to time series data of maximum value (peak value).

Next, the control unit 11 estimates time segments along the time axis during which the target operator 50 performs each basic operation by analyzing the time series feature data. That is, the control unit 11 estimates the correspondence relationship between each time segment in time series data and each basic operation. A method for analyzing time series data may not particularly limited as long as the time segment for each basic operation can be identified, and may be selected as appropriate in accordance with the form of implementation. The method for analyzing the time series data may include a publicly known clustering method such as a state transition probability model, Bayesian model, Markov model, hidden Markov model, multiclass discrimination model, kernel function, and dynamic time warping.

Further, a supervised learning model in which the ability to estimate the time segment for each basic operation is acquired by machine learning may be used for analyzing the time series data. This machine learning may use a data set made up of a combination of the time series data of a feature amount as a sample and correct data indicating a basic operation of each time segment of the sample. The sample is training data. The learning model is constituted by, for example, a neural network, support vector machine or the like. The learning model is trained via a publicly known learning algorithm such as a backpropagation algorithm to output correct data corresponding to an input sample when a sample is input. Thereby, the supervised learning model is trained to output the estimation results of the time segment for each basic operation in the time series data that is entered.

When the estimation of time segments containing basic operations is complete, the control unit 11 can acquire the feature amounts of each measurement value for each basic operation by referring to the segment data in each time segment identified. Thereby, the control unit 11 can acquire the movement data 55 constituted by a plurality of feature amounts associated with the movement with respect to each basic operation included in the work step 40.

In the example shown in FIG. 7, the work step 40 is divided into four basic operations of "View", "Hold", "Carry", and "Adjust", so that mutually adjacent "View" and "Hold" are partially overlapped. As shown here, each basic operation may be partially overlapped with adjacent basic operation. In the example shown in FIG. 7, two adjacent basic operations are brought into contact or partially overlapped with each other. However, the alignment of the basic operations may not be limited to such an example. For example, two mutually adjacent basic operations separate from each other and wasted time that does not belong to any basic operation may exist between the two mutually adjacent basic operations.

In the example shown in FIG. 7, the movement data 55 is constituted by the feature amounts for each measurement value associated with the length of trajectory of the hand, the angle of the hand, a force acting on the hand, the length of trajectory of the head, the angle of the head, and the field of gaze. The length of the trajectory of the hand, the angle of the hand, the length of trajectory of the head, and the angle of the head are derived from image data acquired from the camera 30. The force acting on a hand is derived from measurement data acquired from the load cell 31. The field of gaze is derived from measurement data acquired from the electrooculography sensor 32. Upon receiving such movement data 55, the control unit 11 continues to processing in the next step S102.

The means for receiving the movement data 55 is not limited to such an example, and may be selected as appropriate in accordance with the form of implementation. For example, computers other than the work support device 1 may be connected to the camera 30, the load cell 31, and the electrooculography sensor 32. Further, other computers may generate the movement data 55 with the above data format from the data acquired from the camera 30, the load cell 31, and the electrooculography sensor 32. In this case, the control unit 11 may acquire the movement data 55 by receiving the movement data 55 transmitted from other computers.

(Step S102)

Now, returning to FIG. 5A, in step S102, the control unit 11 operates as the level calculation unit 112, and calculates the skill level of the target operator 50 with respect to the work step 40 by analyzing the movement data 55 acquired. The skill level indicates a degree on a spectrum of whether or not the target operator can perform the work step 40 suitably. The term "can perform the work step 40 suitably" signifies "can complete the work step 40 to meet a standard quality within a standard period of time." As such, the skill level may be derived from the movement data 55 using metrics such as the time spent performing the work step 40, the quality, the level of performance of the movement with respect to the work step 40.

According to this embodiment, the control unit 11 derives the skill level from the movement data 55 using the time spent to complete the work step 40 as metric. Specifically, the control unit 11 measures the actual time from start to finish of the work step 40 by analyzing the movement data 55. For example, the control unit 11 measures the time from starting the first basic operation to completing the last basic operation as the actual time using the results estimating the time segment of each basic operation. The control unit 11 then calculates the skill level in accordance with the ratio between the measured actual time and a predetermined standard time. For example, the control unit 11 may calculate the skill level from the actual time and the standard time on the basis of the following expression 1.

$$(\text{skill level}) = (\text{standard time}) / (\text{actual time}) \qquad (\text{Expression 1})$$

The standard time represents a time spent by a standard worker to complete the work step 40, and may be designated as appropriate by operator's input. The standard time may be derived on the basis of the actual time acquired by observing the movement of a skilled operator capable of completing the work step 40 with a standard quality within the standard time.

The longer the actual time compared to the standard time, the lower the skill level. Whereas, the shorter the actual time compared to the standard time, the greater the skill level. That is, this metric assigns a shorter time spent completing the work step 40 with a greater skill level. Thereby, the control unit 11 can objectively and simply evaluate the skill level of the target operator 50 with respect to the work step 40. Upon completing calculation of the skill level of the target operator 50, the control unit 11 continues to processing in the next step S103.

The processing of step S101 and step S102 may be performed for each process. That is, the control unit 11 identifies a process being performed by the target operator 50 on the basis of the result of the detection made by the infrared sensor 45, and maps the movement data 55 and the skill level acquired to the process identified. Thereby, the control unit 11 can acquire the movement data 55 and the skill level with respect to the work step 40 for each process.

(Step S103)

In step S103, the control unit 11 operates as the second acquisition unit 113, which acquires the movement data 70 of a model operator at a skill level slightly higher than or equal to the skill level of the target operator 50 calculated by accessing the learning process database 60. According to this embodiment, the learning process database 60 is held in the storage unit 12, and thus the control unit 11 accesses the storage unit 12 to acquire the movement data 70 of the model operator.

The learning process database 60 stores the movement data of a model operator for each skill level, the movement data acquired throughout the process of the model operator achieving proficiency in suitably accomplishing the work step 40. That is, the learning process database 60 stores the movement data of a worker obtained at each point of time throughout the process that the worker starts to learn a work step as a beginner and becomes a skilled operator, with the movement data mapped to the skill level of the worker at each point of time.

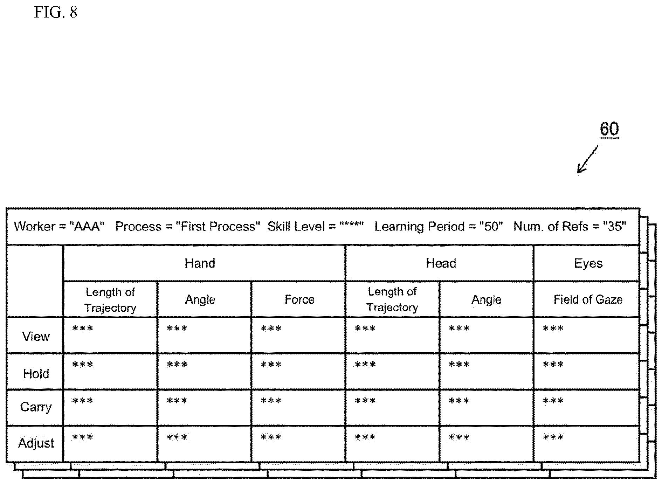

Here, an example of the data format for the learning process database 60 is described using FIG. 8. FIG. 8 schematically illustrates an example of a learning process database 60 according to this embodiment. According to the example in FIG. 8, the learning process database 60 includes a plurality of tables. Each table is provided with each field for moving data, worker, process, skill level, learning period, and number of references.

Specifically, the movement data field stores values of each feature amount that makes up movement data and is associated with a movement with respect to each basic operation. The type of each feature amount is similar to the above movement data 55. The movement data is derived from raw data acquired from each sensor while a target worker is performing the work step 40.

The worker field stores information for identifying the target worker (for example, the name of the worker). The process field stores the type of process during which the movement data is acquired. The skill level field stores the skill level of the target worker with respect to the work step 40 at point of time when acquiring the movement data. The learning period field stores number of times (or period) whereby the target worker performed the work step 40 (each process) until the target worker achieves proficiency in performing the work step 40 (each process) suitably. FIG. 8 shows an example that the learning period filed stores number of times whereby the target worker performed the first process until the target worker achieves proficiency in performing the first process suitably. The reference number field stores the number of times the movement data was referenced as the movement data of a model operator.

Thereby, one table represents the movement data of a specific worker having a specific skill level in a specific process. Each table for a target worker is created at each point of time in the process that the worker becomes a skilled operator starting from a beginner. These series of tables can express the process through which the worker learns a work. However, this data format is an example. The data format of the learning process database 60 is not limited to such an example, and may be determined as appropriate in accordance with the form of implementation.

The control unit 11 accesses the learning process database 60 to search for the movement data 70 of a model operator at a skill level slightly higher than or equal to the skill level of the target operator 50. This search can be performed in accordance with the following sequence. That is, the control unit 11 refers to the value in the process field in each table to extract a table representing the movement data in a target process. Next, the control unit 11 refers to the skill level field in each extracted table to extract a table representing movement data at a skill level slightly higher than or equal to the skill level of the target operator 50. The term "slightly higher" signifies that the target skill level is higher than the skill level of the target operator 50 and that the difference between the target skill level and the skill level of the target operator 50 is within a predetermined range. Therefore, the control unit 11 extracts a table included within the range from a first value representing the skill level of the target operator 50 to a second value made by adding a predetermined value to the first value. The predetermined value may be given as a threshold as appropriate. Thus, the control unit 11 can acquire the movement data represented by the extracted table as the movement data 70 of a model operator for the work step 40 in the target process. The control unit 11 increments the value in the reference number field in the table extracted as the movement data 70 for a model operator.

The learning process database 60 may store each of a plurality of pieces of movement data corresponding to each of a plurality of skilled operators capable of suitably accomplish the work step 40 as the movement data of a model operator. In this case, searching for the movement data 70 of the model operator may retrieve a plurality of tables, that is the movement data of a plurality of skilled operators. When a plurality of tables is extracted as the movement data 70 of a model operator, the control unit 11 may acquire the movement data 70 of a model operator from the plurality of extracted tables as appropriate. According to this embodiment, the control unit 11 acquires the movement data 70 of a model operator from the plurality of extracted tables by adopting either one of the following two approaches.

(1) First Approach

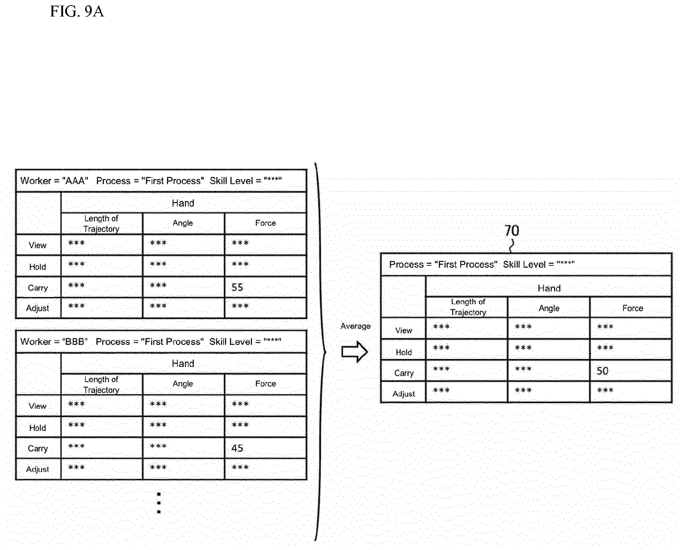

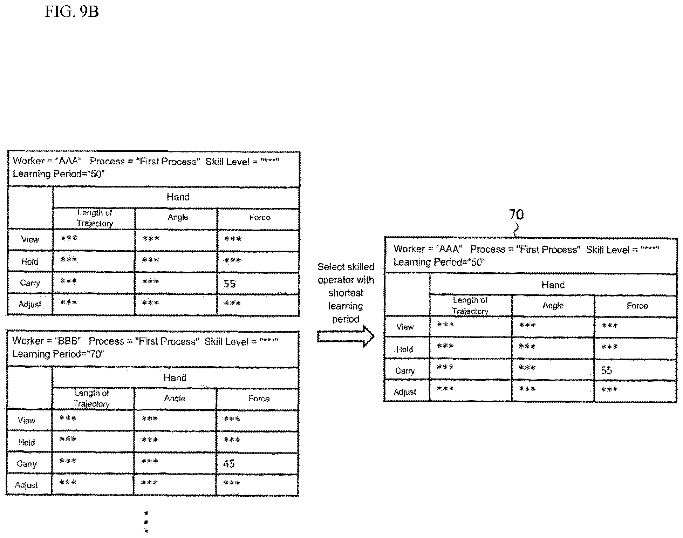

A first approach is described using FIG. 9A. FIG. 9A is a view illustrating a first approach for acquiring the movement data 70 of a model operator. FIG. 9A illustrates simplified tables. FIGS. 9B to 9D also illustrate simplified tables.

In the first approach, the control unit 11 acquires average movement data generated by averaging the movement data of a plurality of skilled operators capable of performing a work suitably as the movement data 70 of a model operator. That is, the control unit 11 generates average movement data by averaging the values of feature amounts stored in the movement data field in each table extracted through the above-described search; the control unit 11 acquires the average movement data generated as the movement data 70 of a model operator.

In an example shown in FIG. 9A, two tables showing the movement data of a worker AAA and the movement data of a worker BBB are extracted for the first process through the above-described search. The control unit 11 averages the values of feature amounts making up the movement data stored in the two tables. In this example, the field for storing a force of a hand in "Carry" for the worker AAA stores the value "55" and the same field for the worker BBB stores the value "45". And thus, the value in the same field in the movement data 70 of a model operator is "50".

According to the first approach, the control unit 11 can acquire the average movement data for a skilled operator as the movement data 70 of a model operator. For the sake of eliminating such an averaging operation, the learning process database 60 may store the average movement data instead of movement data of individual skilled operators. In this case, the control unit 11 can acquire the average movement data directly from the learning process database 60 as the movement data 70 of a model operator.

(2) Second Approach

In a second approach, the control unit 11 selects any one table from a plurality of tables extracted from the learning process database 60 through a search as described above. In other words, the control unit 11 selects movement data of any one skilled operator from a plurality of pieces of movement data. The control unit 11 then acquires the selected movement data of the skilled operator as the movement data 70 of a model operator. The method for selecting any one skilled operator from a plurality of skilled operators may be determined as appropriate in accordance with the form of implementation. According to this embodiment, the control unit 11 may select movement data of any one skilled operator from a plurality of pieces of extracted movement data by adopting any one of the following three selection methods.

(2-1) First Selection Method

A first selection method is described using FIG. 9B. FIG. 9B illustrates the first selection method for selecting the movement data of any model operator from the movement data of a plurality of skilled operators. In the first selection method, the control unit 11 selects the movement data of a skilled operator among the plurality of skilled operators, the skilled operator spending the least time for achieving the skill level for suitably accomplishing the work step 40. That is, the control unit 11 references the value in the learning period field in each table; the value is extracted through the above-described search. The control unit 11 selects a table that includes the minimum value stored in the learning period field. The control unit 11 then acquires the movement data of a skilled operator represented by the table selected as the movement data of a model operator.

According to the example shown in FIG. 9B, the tables of the worker AAA and the worker BBB are extracted via above-described search in the first approach, similarly to the example in FIG. 9A. The control unit 11 references the value in the learning period field in each table. The learning period field for the worker AAA stores the value "50" and the learning period field for the worker BBB stores the value "70". Therefore, the control unit 11 selects the movement data of the worker AAA as the movement data 70 of a model operator.

The first selection method allows the control unit 11 to acquire the movement data of the skilled operator who spent the least time to master the target work step 40 as the movement data 70 of a skilled operator.

(2-2) Second Selection Method

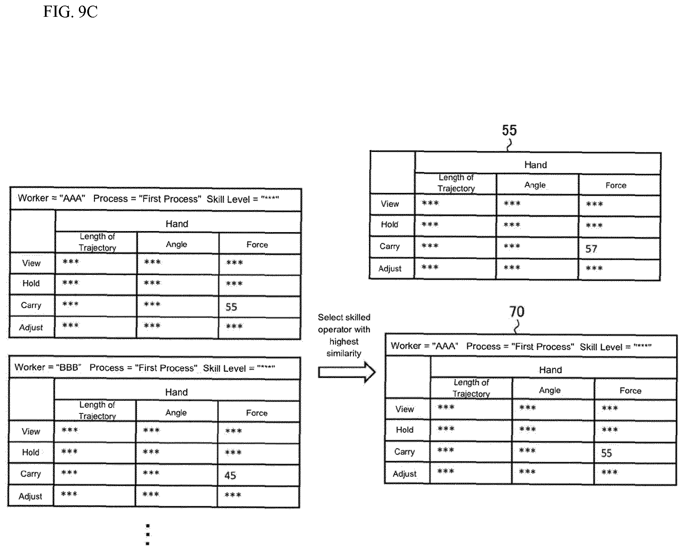

Next, a second selection method is described using FIG. 9C. FIG. 9C illustrates the second selection method for selecting the movement data of any model operator from the movement data of a plurality of skilled operators. According to the second selection method, the control unit 11 selects the movement data of a skilled operator whose type is similar to the type of the target operator 50 among a plurality of skilled operators. The control unit 11 then acquires the selected movement data of the skilled operator as the movement data 70 of a model operator.

The method for determining a degree of similarity in type may be selected as appropriate in accordance with the form of implementation. As an example of the determination method, the control unit 11 may determine a degree of similarity in type between the target operator 50 and a skilled operator on the basis of a degree of similarity in movement data. That is, the control unit 11 may determine that the target operator 50 and the skilled operator are more similar to each other in type with a decrease in the total difference of the feature amounts of the movement data from the target operator 50 and the skilled operator. The difference of feature amounts may be expressed using an absolute value or using a squared error.

According to the example shown in FIG. 9C, similarly to the example in FIG. 9A, each table representing the first process performed by the worker AAA and the worker BBB is extracted through the above-described search. The control unit 11 calculates a total of difference between the value of each feature amounts making up the movement data 55 of the target operator 50 and each feature amount stored in a table of each worker. The force of hand measured for the target operator 50 in "Carry" in the first process contains the value "57", whereas a field for the force of hand measured during "Carry" for the worker AAA contains the value "55" and a field for a force of hand measured during "Carry" for the worker BBB stores the value 45. Therefore, regarding the value measured for a force of hand during "Carry", the worker AAA is more similar to the target operator 50 in type than the worker BBB. Given that other feature amounts are similar, the movement data for the worker AAA is more similar to the target operator 50 in type than the movement data of the worker BBB as shown in FIG. 9C; thus, the control unit 11 selects the movement data for the worker AAA as the movement data 70 of a model operator.

The second selection method allows the control unit 11 to acquire the movement data of a skilled operator whose type is closest to that of the target operator 50 as the movement data 70 of a model operator. The method for determining a degree of similarity in type between the target operator 50 and a skilled operator may not be limited to examples as described above. For example, given that each table includes attribute information (for example, handedness, age, gender, or the like) of a skilled operator, the control unit 11 may determine the similarity in type on the basis of the similarity in attribute between the target operator 50 and a skilled operator.

(2-3) Third Selection Method

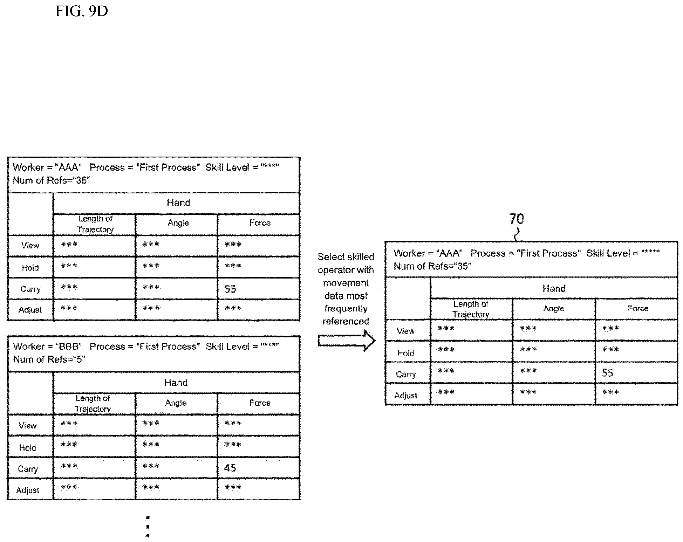

A third selection method is described using FIG. 9D. FIG. 9D illustrates the third selection method for selecting movement data of any model operator from the movement data of a plurality of skilled operators. According to the third selection method, the control unit 11 selects the movement data 70 of the most frequently referenced skilled operator from the extracted movement data of a plurality of skilled operators. That is, the control unit 11 references a value in the field storing the number of references to each table; the value is extracted through the above-described search. The control unit 11 selects a table having the largest value found in the field storing the number of references. The control unit 11 then acquires the movement data of a skilled operator represented by the table selected as the movement data of a model operator.

According to the example shown in FIG. 9D, similarly to the example in FIG. 9A, each table representing the first process performed by the worker AAA and the worker BBB is extracted through the above-described search. The control unit 11 references a value in the field storing the number of references for each table. The field storing the number of references for the worker "AAA" contains the value "35", whereas the field storing the number of references for worker "BBB" contains the value "5". Therefore, the control unit 11 selects the movement data of the worker AAA as the movement data 70 of a model operator.

The third selection method allows the control unit 11 to acquire the movement data most frequently used for supporting the learning of the target work step 40 as the movement data 70 of a model operator.

(2-4) Additional Selection Methods

The method for selecting the movement data of any one of skilled operators from a plurality of pieces of extracted movement data is not limited to these examples and may be determined as appropriate in accordance with the form of implementation. For example, the skilled operator may be designated as a model operator via input from an operator. In this case, the control unit 11 acquires the movement data of the designated skilled operator as the movement data 70 of a model operator.

According to this embodiment, the control unit 11 can acquire the movement data 70 of a model operator at a skill level slightly higher than or equal to the skill level of the target operator 50 from the learning process database 60 using each method as described above. Upon receiving movement data 70 of a model operator, the control unit 11 continues to processing in the next step S104.

Step S104 and S105

Now, returning to FIG. 5A, in step S104, the control unit 11 operates as the instruction determination unit 114, and compares the acquired movement data 70 of a model operator with the movement data 55 of the target operator 50. In the next step S105, the control unit 11 determines an instruction that allows the movement of the target operator 50 to approach the movement of the model operator with respect to the work step 40 on the basis of the results of comparison.

That is, the control unit 11 derives the difference between the movement data of the target operator 50 and the movement data 70 of a model operator on the basis of comparison in step S104. In step S105, the control unit 11 determines an instruction that reduces the difference between the movement data. The method for comparing the movement data may be selected as appropriate in accordance with the format of the movement data Further, the method for determining an instruction may be selected as appropriate in accordance with the format of the difference of the movement data.

According to this embodiment, the work step 40 includes a plurality of basic operations. Here in step S104, the control unit 11 compares the movement data 70 of a model operator and the movement data 55 of the target operator 50 for each basic operation. Then, in step S105, the control unit 11 determines an instruction for the target operator 50 with respect to at least one of the plurality of basic operations on the basis of the results of comparison.

In addition, according to this embodiment, the movement data is made up of a plurality of feature amounts associated with the movement with respect to the work step 40. Here, in step S104, the control unit 11 compares the movement data 70 of a model operator and the movement data 55 of the target operator 50 and thus derives the difference in each feature amount from the movement of the model operator and the movement of the target operator 50 with respect to the work step 40. In step S105, the control unit 11 identifies, on the basis of the results of comparison, one or a plurality of feature amounts having large differences between the target operator 50 and the model operator in a plurality of feature amounts with respect to at least one of a plurality of basic operations. The feature amounts "having large differences" may refer to first through Nth feature amounts listed in order of the magnitude of difference (where N is an integer of 1 or more), or may refer to feature amounts having differences greater than a threshold. The control unit 11 then determines the instruction in accordance with the differences between the target operator 50 and the model operator for each of one or a plurality of feature amounts. Thereby, the control unit 11 can encourage the target operator 50 to improve the movements that are significantly deviated from the model operator when performing the work step 40.

An instruction for allowing the movement of the target operator 50 to approach the movement of a model operator may be determined as appropriate in accordance with the difference in each feature amount. For example, assume that a feature amount associated with a force acting on the hand is identified as a feature amount with a major difference between the target operator 50 and a model operator. In this case, if the force acting on the hand of the target operator 50 is less than the force acting on the hand of the model operator, the control unit 11 may determine an instruction to encourage the target operator 50 to increase the power they apply. Whereas, if the force acting on the hand of the target operator 50 is greater than the force acting on the hand of the model operator, the control unit 11 may determine an instruction to encourage the target operator 50 to reduce the power they apply. According to this embodiment, a template having such an instruction is stored in the instruction database 65.

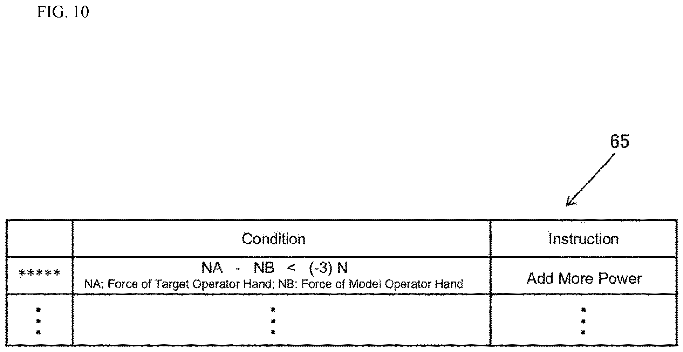

FIG. 10 schematically illustrates an example of an instruction database 65. According to the example shown in FIG. 10, the instruction database 65 is expressed in the form of a table, and each record (row data) has fields for ID, condition, and instruction. One record corresponds to one instruction. An ID field stores an identifier for identifying each record. A condition record stores a criterion for extracting a target record. An instruction field stores a template for an instruction. However, this data format is an example. The data format of the database 65 is not limited to these examples, and may be determined as appropriate in accordance with the form of implementation. Each record may be made as appropriate A template for a condition and an instruction stored in each record may be designated via input entered by the operator.

The control unit 11 references a condition field in each record, and determines whether or not the difference in the feature amounts identified above for the target operator 50 and the model operator satisfies the condition stored in the condition field. The control unit 11 thereby extracts, from the instruction database 65, a record where the difference in the feature amounts identified above for the target operator 50 and the model operator satisfies the condition stored in the condition field. The control unit 11 then refers to the instruction field in the record extracted, thereby acquiring the template for an instruction. Thereby, the control unit 11 can determine an instruction in accordance with the difference between the target operator 50 and a model operator in each of one or a plurality of feature amounts that are identified.

According to the example shown in FIG. 10, the condition field in a first record stores: "the force of the hand of the model operator (NB) subtracted from the force of the hand of the target operator (NA) should be less than -3 N". In other words, the control unit 11 extracts the first record if the force acting on the hand is identified as the feature amount with a large difference between the target operator 50 and the model operator, and the difference between the force NA acting on the hand of the target operator 50 and the force NB acting on the hand of the model operator should be less than -3 N. The control unit 11 then acquires a template "please add power" which is stored in the instruction field as an instruction. Upon determining an instruction for the target operator 50, the control unit 11 continues to processing in the next step S106.

According to this embodiment, the task allocated to the target operator 50 includes five processes. Therefore, the control unit 11 may perform processing for steps S101 to S105 for each process. Thereby, the control unit 11 may determine an instruction for allowing the movement of the target operator 50 to approach the movement of a model operator with respect to the work step 40 for each process.

(Step S106)

Now, returning to FIG. 5B, in step S106, the control unit 11 operates as the output unit 115, and outputs information associated with the instruction determined. The output format of the information and an output destination may be selected as appropriate in accordance with the form of implementation.

As an example, the control unit 11 may output a message, through the output device 15, to present the instruction determined in step S105. Thereby, the control unit 11 can transfer an instruction for improving the movement of the target operator 50 with respect to the work step 40 to the target operator 50, a supervisor, a trainer or the like.

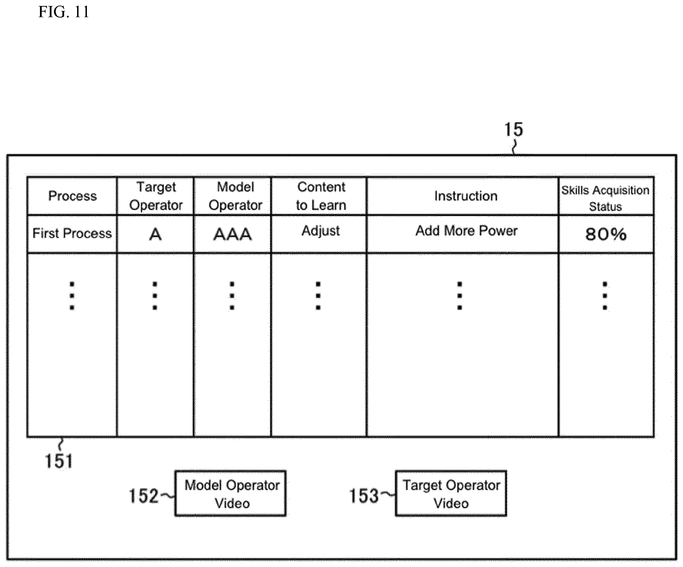

FIG. 11 schematically illustrates an example of a screen on the output device 15 for displaying an instruction. According to the example in FIG. 11, the screen of the output device 15 provides an area 151 for displaying a list of instructions and two buttons (152, 153) arranged below the area 151. The area 151 displays stages of the instructions, the target operator 50, the skilled operator (worker) selected as the model operator, basic operations subject to instruction (particulars to be learned), the instruction, and a skill acquisition status. The skill acquisition status is described later. The first button 152 is used to play back the movement data acquired by capturing the movement of a model operator performing the work step 40. The video data of the model operator may be stored in the storage unit 12 or in an external storage unit. The second button 153 is used to play back the video data captured by the camera 30. The difference in the movement between the model operator and the target operator 50 can be confirmed through viewing and comparing these videos. Once the control unit 11 outputs information associated with an instruction as described above, the control unit 11 continues to processing in the next step S107.

The output destination for information is not limited to the output device 15; for example, the output destination may be output devices such as the user terminal carried by the target operator 50 or a supervisor, a display arranged near the target operator 50, or a speaker.

The timing for outputting information may be selected as appropriate in accordance with the form of implementation. For example, the control unit 11 may identify the workspace where the target operator 50 is present on the basis of the result of the detection made by each infrared sensor 45. The control unit 11 may output information associated with the instruction for a target process when the target operator 50 is assumed to start performing the work step 40 in the target process. This allows for an instruction that encourages the target operator 50 to improve a movement pertaining to the work step 40 to be presented to the target operator 50, a supervisor, or the like when the target operator starts performing the work step 40 in the target process.

Step S107

Returning to FIG. 5B, in step S107, the control unit 11 operates as the first acquisition unit 111, using one or a plurality of sensors to measure the movements of the target operator 50 performing the work step 40 and again acquire movement data generated thereby. The additional movement data that is acquired is an example of the "other movement data" according to the present invention. After outputting the information associated with the instruction in step S106, the control unit 11 performs the processing in this step S107 with respect to the target operator 50 repeating the work step 40. The step S107 may be performed similarly to step S101. Upon receiving the movement data, the control unit 11 continues to processing in the next step S108.

Step S108

In step S108, the control unit 11 operates as the skills acquisition determination unit 116 and determines whether or not the target operator 50 successfully learned the movements with respect to the work step 40 in accordance with the instruction by analyzing the movement data acquired in step S107. The determination method may be selected as appropriate in accordance with the movement data and the instruction. For example, the control unit 11 can determine that the target operator 50 has successfully learned the movements with respect to the work step 40 in accordance with the instruction if the movements of the target operator 50 expressed in the movement data continuously follow the instruction. According to this embodiment, the control unit 11 performs the processing sequence described below to determine whether or not the target operator 50 learned the movements with respect to the work step 40 in accordance with the instruction.

Determining Skills Acquisition

FIG. 12 is a flowchart illustrating an example of a processing sequence for determining whether or not the target operator 50 has acquired the movements with respect to the work step 40 in accordance with the instruction. However, the processing sequence described below is merely one example and each processing may be subject to change wherever possible. Further, the processing sequence described below may allow the omission of steps, replacement, and addition as appropriate in accordance with the form of implementation.

Step S201

In step S201, the control unit 11 determines whether or not the target operator 50 performs the movements following the instruction on the basis of the movement data acquired in step S107. According to this embodiment, in steps S104 and S105, one or a plurality of feature amounts having the large difference between a model operator and the target operator 50 is identified and the control unit 11 determines an instruction in accordance with the difference between the target operator 50 and the model operator for each of identified the one or the plurality of feature amounts. Therefore, the control unit 11 determines whether or not the target operator 50 performs the movements following the instruction by analyzing the one or the plurality of feature amounts used for determining the instruction.
For example, assume that as shown in the example described above, the difference between the force acting on the hand of the target operator 50 and the force acting on the hand of a model operator is less than -3 [N] and the instruction "please add power" is selected. In this case, the control unit 11 determines whether or not the force acting on the hand of the target operator 50 approached the force acting on the hand of the model operator by analyzing the movement data acquired. For example, when the control unit 11 determines that the force acting on the hand of the target operator 50 approached the force acting on the hand of the model operator with the difference between the force acting on the hand of the operator 50 and the force acting on the model operator being -3 [N] or greater, the control unit 11 determines that the target operator 50 performed the movements following the instruction. Whereas, when the control unit 11 determines that the force acting on the hand of the target operator 50 did not approach the force acting on the hand of the model operator, the control unit 11 determines that the target operator 50 did not perform movements following the instruction. The range of values for determining whether or not the movements of the target operator 50 approached the movement of a model operator may be established as appropriate in accordance with the form of implementation. Upon completing this assessment, the control unit 11 continues to processing in the next step S202.

Step S202

In step S202, the control unit 11 determines a fork in processing on the basis of the result of the determination made in step S201. In step S202, the control unit 11 moves the program to a next step S203 if the control unit 11 determines that the target operator 50 performed the movements following the instruction. Whereas, in step S202, the control unit 11 skips the processing in step S203 and moves the program to a next step S204 if the control unit 11 determines that the target operator 50 did not perform the movements following the instruction.

Step S203

In step S203, the control unit 11 increments the number of executions (also referred to as "number of clears") by one when the target operator 50 executes the movements that follow the instruction. Thereby, the control unit 11 counts the number of clears. Once the number of clears are counted, the control unit 11 continues to the next step S204.

Step S204

In step S204, the control unit 11 determines whether or not the number of clears is greater than or equal to a predetermined number. The predetermined number serves as a benchmark for mastering a model movement. The predetermined number may be specified as appropriate in accordance with the form of implementation; for example, the predetermined number may be specified via input from an operator. When the number of clears is greater than or equal to the predetermined number, the control unit continues to processing in the next step S205. Whereas, when the number of clears is less than the predetermined number, the control unit 11 continues to processing in the next step S206.

Step S205 and S206

In step S205, the control unit 11 determines that the target operator 50 has learned the movements in accordance with the instruction. Whereas, in step S206, the control unit 11 determines that the target operator 50 has yet to learn the movements in accordance with the instruction.
Once the processing in step S205 or in step S206 is complete, the control unit 11 enters a series of processing for determining whether or not the target operator 50 has learned the movements with respect to the work step 40 in accordance with an instruction. Once the series of processing in the determination step is complete, the control unit 11 moves the program to processing the next step S109.

Step S109

Now, returning to FIG. 5B, in step S109, the control unit 11 determines along which branch processing continues on the basis of the result of the determination made in step S108. In step S108, when the control unit 11 determines that the target operator 50 learned the movements in accordance with the instruction, the control unit 11 continues to the processing in the next step S110. Whereas, when the control unit 11 determines that the target operator 50 has yet to acquire the movements in accordance with the instruction, the control unit 11 repeats the processing from step S106.
That is, the control unit 11 repeats the processing in steps S106 to S109 for as long as the control unit 11 determines in step S108 that the target operator 50 has yet to acquire the movements in accordance with the instruction. That is, via step S106, the control unit 11 repeats outputting information associated with the instruction until the control unit 11 determines that the target operator 50 has learned the movements in accordance with the instruction. Further, the control unit 11 repeatedly determines whether or not the target operator 50 has learned the movements in accordance with the instruction on the basis of the processing in steps S107 and S108. This allows the control unit 11 to monitor how the target operator 50 learns the movements in accordance with the instruction. Through this process of repetition the control unit 11 may calculate a quotient as information representing a skill acquisition status by dividing the number of clears by the predetermined number that serves as a benchmark for skill acquisition. Then, the control unit 11 may display the calculated quotient as the skill acquisition status in the area 151 on the screen of the output device 15.

Step S110

In step S110, the control unit 11 operates as the registration unit 117, maps the movement data 55 of the target operator 50 acquired in step S101 to the skill level calculated in step S102, and stores the mapped data in the learning process database 60. According to this embodiment, the control unit 11 generates a table corresponding to the movement data 55 and stores the generated table into the learning process database 60.
The control unit 11 also may store the movement data of the target operator 50 acquired in step S107 in the learning process database 60. In this case, the control unit 11 calculates the skill level of the target operator 50 with respect to the movement data acquired in step S107 similarly to step S102. Then, the control unit 11 maps the movement data acquired in step S107 to the calculated skill level and stores the mapped data into the learning process database 60.

Once the registration processing is complete, the control unit 11 completes the information processing according to this movement example. The control unit 11 may repeatedly perform the series of processing in steps S101 to S110 until the target operator 50 becomes a skilled operator, that is, until the target operator 50 can suitably complete the target work step 40. The work support device 1 can thus support the target operator 50 in learning the work step 40. In the process of repeating the step S110 the control unit 11 may obtain new movement data for a new model operator through the target operator 50 becoming able to suitably complete the work step 40. That is, after the target operator 50 becomes a skilled operator, the movement data of the target operator 50 can be used as the movement data of a model operator for other target operators.

Features

As described above, the work support device 1 according to this embodiment acquires the movement data 70 of a model operator, in step S103, when the model operator had a skill level close to the skill level of the target operator 50; the movement data acquired is not at a skill level significantly deviated from the skill level of the target operator 50. Then, in steps S104 and S105, the control unit 11 determines an instruction for allowing the movement of the target operator 50 to approach the movement of a model operator with respect to the work step 40 on the basis of the comparison between the movement data 70 of the model operator as described above and the movement data 55 of the target operator 50. In this way, according to this embodiment, it is possible to allow the target operator 50 to use the movement data 70 suited to the skill level of the target operator 50 to learn the work step 40 efficiently as if the target operator 50 pursued the process through which the model operator mastered the work step 40. In addition, according to this embodiment, the skill level of the target operator 50 is derived in step S102 from the actual movement data 55 of the target operator 50. This allows the skill level of the target operator 50 to be evaluated objectively with respect to the work step 40. Therefore, the work support device 1 according to this embodiment allows objective evaluation of the skill level of the target operator 50 with respect to the work step 40 and facilitates the target operator 50 in efficiently mastering the work step 40.

§ 4 Modification Examples

While an embodiment of the present invention is described above in detail, all points in the previous description are merely examples of the present invention. It goes without saying that various modifications and variations are possible without departing from the scope of the invention. For instance, the following modification is possible. Note that constituent elements that are identical to the constituent elements in the above described embodiment are given the same reference numerals and where appropriate, a description of features that are identical to the above embodiment are omitted. The following modifications may be combined as appropriate.

4.1

The embodiment described above shows an example of applying the present invention in supporting the target operator 50 who learns the work step 40 in each process included on a production line. However, the scope of application for the present invention is not limited to such a case, and the present invention may be applied to any situation as long as a human performs some work step. For example, the present invention can be applied in a situation when a beginner is learning how to drive a car.

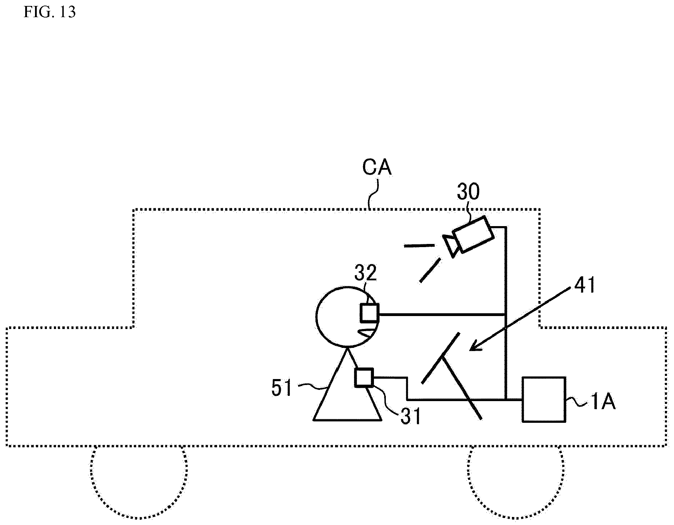

FIG. 13 schematically illustrates an example in a situation where a work support device 1A according to this modification example is adopted. The hardware configuration and software configuration of the work support device 1A is similar to the work support device 1 according to the embodiment described above. A driver 51 who drives a vehicle CA is an example of a "target operator" according to the present invention, and a driving operation 41 is an example of a "work step" according to the present invention. Besides these points, the work support device 1A operates similarly to the work support device 1 according to the embodiment described above. That is, the work support device 1A acquires the movement data of the driver 51 and calculates the skill level of the driver 51 with respect to the driving operation 41 by analyzing the movement data acquired. Subsequently, the work support device 1A accesses a database and acquires the movement data of a model driver at a skill level slightly higher than or equal to the skill level calculated for the driver 51. Next, the work support device 1A compares the movement data of the driver 51 with the movement data of the model driver and determines an instruction for allowing the movement of the driver 51 with respect to the driving operation 41 to approach the movement of the model driver on the basis of the results of comparison. The work support device 1A then outputs information associated with the instruction determined. Thereby, the work support device 1A according to this modification example can support the driver 51 in mastering how to drive a vehicle CA.

4.2

According to the embodiment described above, the camera 30, the load cell 31, and the electrooculography sensor 32 can be used as the sensors for measuring the movement of the target operator. However, the sensors applicable to the present invention are not limited to these examples. The type of the sensor is not particularly limited as long as the sensor is capable of measuring a physiological parameter associated with the movement of the target operator, and may be selected as appropriate in accordance with the form of implementation. Further, the number of the sensors to be used is not limited to three; for example, one, two, four or more sensors may be used.

Further, in the embodiment described above, raw movement data may include image data, measurement data for force, and measurement data for eye potential. However, the configuration of the movement data is not limited to these examples. The type of the movement data is not particularly limited as long as the data is associated with movement; the type of movement data may be selected as appropriate in accordance with a sensor used.

For example, a sensor may be used as a camera, a motion capture, a load cell, an electroencephalograph, a magnetoencephalography, a magnetic resonance imaging device configured to capture a blood flow associated with a brain activity using the functional magnetic resonance imaging, a brain activity measuring device configured to measure a brain blood flow using the functional near infrared spectroscopy, a gaze sensor configured to measure a pupil diameter and a gaze direction, an electrooculography sensor, an electrocardiograph, an electromyograph, or a combination of these devices. Hereby, the movement data may be acquired by observing, for example, the movement of the body, a brain wave, a brain blood flow, a pupil diameter, a gaze direction, an electrocardiogram, an electromyogram, a galvanic skin reflex, and the like.

4.3

According to the embodiment described above, the learning process database 60 and the instruction database 65 are stored in the storage unit 12. However, the storage location for the learning process database 60 and the instruction database 65 is not limited to such an example, and may be selected as appropriate in accordance with the form of implementation. At least either the learning process database 60 or the instruction database 65 may be stored in, for example, an external storage device such as a network attached storage (NAS). In this case, the work support device 1 may access at least either the learning process database 60 or the instruction database 65 stored in the external storage device for example via a network.

4.4

According to the embodiment described above, the work support device 1 performs a series of processing in the steps S101 to S110. However, the processing sequence in the work support method is not limited to such an example. For example, at least one of steps S107 to S109 and step S110 may be omitted. In this case, at least either the skill acquisition determination unit 116 or the registration unit 117 may be omitted in the software configuration of the work support device 1.

4.5

According to the embodiment described above, the work step 40 is configured to include a plurality of basic operations. However, the configuration of the work step 40 may not be limited to such an example. The work step 40 may not be divided into a plurality of basic operations. Further, according to the embodiment described above, the movement data is made up of a plurality of feature amounts associated with the movement with respect to the work step 40. However, the configuration of the movement data may not be limited to such an example, and may be selected as appropriate in accordance with the form of implementation. The movement data may be raw data itself acquired from sensors.

4.6

According to the embodiment described above, the skill level is calculated using a time spent performing the work step 40 as a metric. However, the method for calculating the skill level may not be limited to such an example, and may be determined as appropriate to evaluate the performance with respect to the work step 40. For example, each basic operation in the work step 40 may be defined to include the process of at least one cycle of human cognitive information processing to measure the skill level objectively and quantitatively. The movement data may be generated by measuring the sensory activities and physical activities of the target operator 50 using a plurality of sensors. Analyzing the movement data may include evaluating at least one of the accuracy, the speed, the stability and the rhythm of each basic operation. The skill level may be calculated in accordance with the results of the evaluation.

Cognitive Information Process

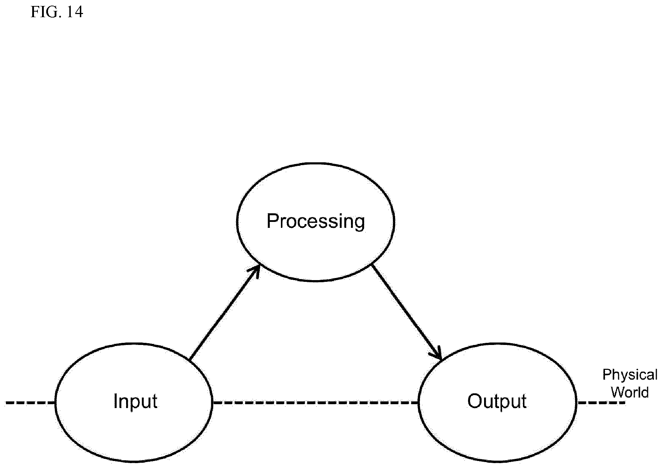

Here, the sensory activity and physical activity measured by a sensor is described using Figure 14. FIG. 14 schematically illustrates an example of a model expressing a human cognitive information processing. As illustrated in FIG. 14, a process of human cognitive information processing can be modeled using the following three steps: That is, in a first step, an input system receives input data. The input system is typically a sensory system. Next, in a second step, a processing system (brain) performs some information processing with respect to the input data acquired from the input system. Then, in a third step, the results of information processing performed by the processing system is output by an output system. The output system is typically a musculoskeletal system (and brain).

According to this model, the sensory activity and the physical activity may be defined as follows. That is, the sensory activity includes acquiring input data associated with an object using a sensory system such as vision, hearing, and sense of touch as an input system; performing information processing with respect to the input data acquired for recognizing the attribute of the object such as position, shape, size, and texture using a processing system; or performing information processing to make some decision on the basis of the recognition results. The recognition in this sensory activity includes spatial recognition and shape recognition. The spatial recognition includes the recognition of the attribute associated with space such as the position and the traveling speed of the object. The shape recognition includes the recognition of the attribute associated with a FIG. such as the shape, size, and texture of the object. In contrast, where musculoskeletal system is the system and organs involved in movement of the body, such as the bones, muscles, joints, and nerves, physical activity uses the musculoskeletal system as the output system to move the body on the basis of the above recognition results, or to carry out the above recognition. Thus, physical activity involves moving the body and physically affecting an object or changing the positional relationship with the object.

A person performs a work through sensory activities and physical activities while repeating the process of such cognitive information processing. As shown in FIG. 14, while a person performs a work, an input system (mainly a sensory system) and an output system (mainly a musculoskeletal system) function as an interface to outside world). Therefore, the sensory activities and physical activities can be measured through the behavior in the input system and output system respectively. The input system, the processing system, and the output system are mutually related as described above, and thus the quality of information processing with respect to a work by the processing system can be evaluated indirectly by tracking at least either the sensory activities or the physical activities.

That is, the movement data acquired by measuring the sensory activities and physical activities using a plurality of sensors exhibits the performance of the sensory activities and the physical activities with respect to a work. The performance of the sensory activities and the physical activities relates to the results of whether or not to perform the work suitably. That is, the higher the performance of the sensory activities and the physical activities, the better the quality of information processing in the processing system with respect to the work, and it can be said that the ability for performing the work is high (the work can be performed suitably). Whereas, the lower the performance of the sensory activities and the physical activities, the worse the quality of information processing in the processing system with respect to the work, and it can be said that the ability for performing the work is low (the work cannot be performed suitably). Therefore, the quality of information processing with respect to a work, in other words, the ability level to perform a work step (skill level) can be evaluated objectively and quantitatively on the basis of the movement data acquired by measuring sensory activities and physical activities using a plurality of sensors.

A work can be accomplished by a series of sensory activities and physical activities. A plurality of types of combinations of sensory activities and physical activities can appear in the process of performing a work. Here, the work can be considered to include a plurality of basic operations similarly to the embodiments described above. Each basic operation then can be defined as a combination of sensory activities and physical activities. When a person repeatedly performs a same work step, the same type of combination of sensory activities and physical activities appears every time each work step is performed. A section in which the same type of combination appears during the execution of each work step can be extracted as a section during which a common basic operation (same type of basic operation) is processed. As such, a repeatedly performed work step is preferably selected to facilitate the extraction of each basic operation.

Additionally, the human cognitive process can be performed for a plurality of cycles while accomplishing a work step. Here, each basic operation may be defined to include at least one cycle of human cognitive information processing to facilitate identification of each basic operation included in a work step. It can be assumed that basic operations are arranged serially in temporal order and the results of processing a basic operation can be used as an input to the next basic operation. According to the embodiment described above, each basic operation included in a work step (work step 40) may be defined to include at least one cycle of human cognitive information processing and may be defined as a combination of sensory activities and physical activities. Specifically, the work step 40 may be defined to include four types of basic operations; "View", "Hold", "Carry", and "Adjust" similarly to the embodiments described above.

The sensory activity in "View" is, for example to recognize the attribute of a work object such as the position, the shape, and the size through vision and hearing. Whereas, the physical activity in "View" is, for example, to move a body such as to change a gaze direction, to change the angle of a neck, and to point for confirmation to perform spatial recognition and shape recognition. The sensory activity in "View" may include recognition of the textile as an attribute of the object through a sense of touch with a finger arranged near the object or brought into contact with the object.

The sensory activity during "Hold" may involve, for instance, using touch to recognize the texture of the object for the work step while determining a position to hold said object on the basis of spatial recognition and shape recognition of the object via sight and touch. In contrast, the physical activity involved in "Hold" may be to move a part of the body such as the hand or the finger on holding the object so that the object does not fall on the basis of the sensory activity.

The sensory activity during "Carry" may involve determining a location of the destination for the object (target position) on the basis of the results of spatial recognition of the object. In contrast, the physical activity during "Carry" may involve moving apart of the body such as the arm, leg, or waist to carry an object being held from the current position to a target position.

The sensory activity during "Adjust" may involve, for instance, using sight or touch to recognize a change in the condition of the position, angle, or shape of the object. In contrast, the physical activity during "Adjust" may involve moving a part of the body such as the finger, or the like, while changing the condition of the target object until the object is in the target condition.

Defining each basic operation as above makes it possible to measure the sensory activities and physical activities of the target operator 50 when the target operator 50 performs each basic operation included in the work step 40; this allows the skill level of the target operator 50 to be calculated objectively and quantitatively. However, the type, number, combination, and sequence of the basic operations are not particularly limited to these examples and may be established as appropriate in accordance with the form of implementation. For example, a sequence of basic operations may be defined where "View" is performed after "Adjust".

Methods for Calculating Skill Level According to Modification Examples

The work support device 1 according to the embodiment described above may derive the skill level of the target operator 50 from the movement data considering the following points. Specifically, in step S 101, the control unit 11 operates as the first acquisition unit 111 and acquires the movement data generated by using a plurality of sensors to measure the sensory activity and the physical activity of the target operator 50. Each sensor may be selected as appropriate.

The behavior of a sensory system may be expressed in, for example, an electroencephalogram, a cerebral blood flow, a pupil diameter, a gaze direction, a countenance, voice, an electrocardiogram, a blood pressure, an electromyogram, a galvanic skin reflex (GSR) and the like. As such, one or a plurality of sensors for measuring sensory activities may include, for example, an electroencephalograph, a magnetoencephalography, a magnetic resonance imaging device configured to capture a blood flow associated with a brain activity using the functional magnetic resonance imaging, an electrocardiograph, a sphygmomanometer, a galvanic skin response meter, a myoelectric potential sensor, an electrooculography sensor, a camera, or a combination of these devices. In contrast, the behavior may be expressed with the musculoskeletal system, such as the finger, hand, leg, neck, waist, joints, or muscles. As such, one or a plurality of sensors for measuring physical activities may include, for example, a camera, a motion capture, a load cell, or a combination of these devices. A plurality of sensors may be made up of a camera, a microphone, an electroencephalograph, a magnetoencephalography, a magnetic resonance imaging device, an electrocardiograph, a sphygmomanometer, a galvanic skin response meter, a myoelectric potential sensor, a load cell, a motion capture, a brain activity measuring device, a gaze sensor, an electrooculography sensor, or a combination of these devices.

The movement data acquired represents the performance of the sensory activities and the physical activities with respect to each basic operation included in the work step 40. To suitably accomplish a work step means that the basic operations achieved as a result of the sensory activity and the physical activity are executed with high precision. Therefore, the performance with respect to each basic operation can be evaluated on the basis of the accuracy of the execution of each basic operation.

More specifically, the ability to suitably accomplish a task means the ability to execute the basic operations in the correct order at a suitable speed. In addition, when a target operator repeats trial executions, the higher the ability of a target operator in executing the work step, the lower the variation in the trial executions of each basic operation. In other words, a target operator having a high ability in executing the work step can execute each basic operation uniformly in each trial execution. Therefore, the execution accuracy in each basic operation appears, for example, in the correctness, the stability, the speed, and the rhythm in the execution of each basic operation.

The correctness is a metric indicating a measure of whether or not the basic operations were executed in the correct sequence when attempting the work step once. The stability is a metric indicating a measure of whether or not the basic operations are executed with a uniform procedure for each trial execution when the work step is attempted a plurality of times. The speed is a metric indicating a measure of the length of time spent on the basic operations and the overlap with a neighboring basic operation when attempting the work step once. The rhythm is a metric indicating a measure of whether or not a fixed time is spent on the basic operations during each trial execution in the case that the work step is attempted a plurality of times. Given these four metrics of correctness, stability, speed, and rhythm, it is possible to appropriately evaluate the performance of a target operator with respect to the basic operations.

Here, in next step S102, the control unit 11 operates as the level calculation unit 112, and evaluates at least one of the correctness, the speed, the stability, and the rhythm in the execution of each basic operation by analyzing the movement data acquired. The control unit 11 then calculates the skill level in accordance with the results of evaluation. However, these four metrics are examples of the metrics used to evaluate the precision of executing the basic operations. The metrics used to evaluate the precision of executing the basic operations are not limited to these examples and may be determined as appropriate in accordance with the form of implementation.

First to Third Steps

Specifically, in a first step, the control unit 11 converts movement data to time series feature data. Next, in a second step, the control unit 11 estimates each time segment in which a target operator performs each basic operation along the time axis by analyzing the time series feature data. These first step (conversion processing) and second step (estimation processing) may be performed similarly to the embodiments described above. Then, in next third step, the control unit 11 identifies the execution time, the time overlap, the number of executions, and the execution order.

More specifically, the length of a time segment for each of the basic operations and the overlap with a neighboring time segment represents the length of time spent executing the basic operations (the execution time) and the amount of overlap with a neighboring basic operation (time overlap). In the example illustrated in FIG. 7, the execution times for "Carry" and "Adjust" are longer than the execution times for "View" and "Hold". "View" and "Hold" have some time overlap. Additionally, the number of time segments corresponding to each of the basic operations indicates the number of times the basic operations are executed (the number of executions). In the example in FIG. 7, each of the basic operations are executed once. Additionally, the line up (sequence) of time segments corresponding to each of the basic operations indicates the sequence in which the basic operations are executed (the execution order). In the example in FIG. 7, the basic operations: "View", "Hold", "Carry", and "Adjust" are executed in that order. Thus, on identifying the execution time, the time overlap, the number of executions, and the execution order for the basic operations, the control unit 11 continues to processing in the next fourth step.

Fourth Step

In the next fourth step, the control unit 11 evaluates at least any one of the correctness, the stability, the speed, and the rhythm in the execution of each basic operation on the basis of the execution time, the time overlap, the number of executions, and the execution order for the basic operations identified in the third step.

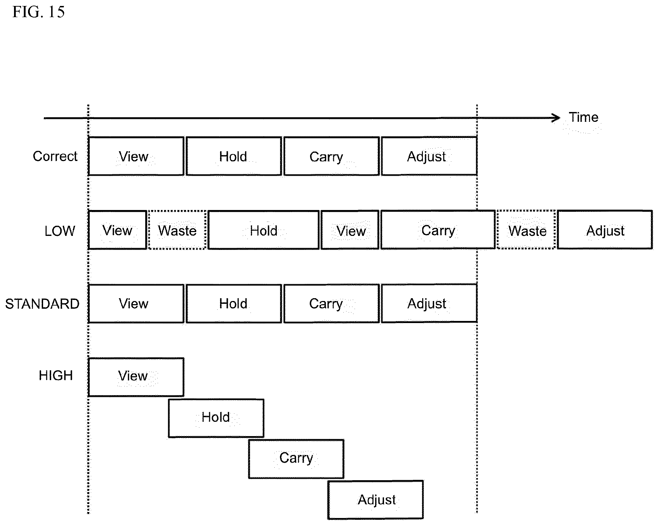

The processes a person uses to master a work step are described using FIG. 15. FIG. 15 schematically illustrates an example of a process wherein a person masters a work step; In the example in FIG. 15, a work step contains four basic operations: "View", "Hold", "Carry", and "Adjust". It is assumed that performing these basic operations in this order in a suitable time leads to suitably accomplishing the work step ("correct", FIG. 15).

A person who has not mastered the work step, i.e., a beginner with a low ability to accomplish the task, cannot execute the basic operations in the correct order and in a suitable time. Therefore, the beginner has a low precision in executing the work step and the beginner cannot complete the work step in a standard time at a standard quality. Accordingly, as illustrated by the "Low Level" in FIG. 15, the processes executed by a beginner to accomplish the task is such that the time spent for a basic operation is longer than the suitable time; or the time spent on the basic operation is extremely short (i.e., insufficient time is used to execute the basic operation) therefore, the basic operation has to be repeatedly performed; or, there is time not used on any basic operation, or is wasted; or, there is an error in the order in which the basic operations are performed.

As a beginner starts to master a work step, the beginner gradually wastes less time in the process of executing the work step, and is able to seamlessly perform the basic operations in the correct order within a suitable time. Hereby, the beginner becomes a skilled operator with ability at a "Standard Level" illustrated in FIG. 15. That is, a skilled operator at a standard level is able to execute the basic operations seamlessly, in the correct order, and within a suitable time; therefore, the skilled operator is able to complete the work step within the standard time at a standard quality. When the skilled operator at a standard level further masters the work step, the skilled operator is able to execute the basic operations even more seamlessly and in a shorter time. Thus, as at the "High Level" illustrated in FIG. 15, there is a time overlap between neighboring basic operations, and less time is spent on each of the basic operations.

The control unit 11 evaluates the correctness, stability, speed, and rhythm of execution of each of the basic operations on the basis of the execution time, time overlap, number of executions, and execution order for the basic operations to estimate at which level a target operator belongs, i.e., from low to high. That is, the more times the target operator repeats a work step in a way that exhibits "high skill level", the higher evaluations the control unit 11 gives to the correctness, the stability, the speed, and the rhythm of the execution of each basic operation executed by the target operator, and calculates high performance indexes for the basic operations accordingly. Whereas, the more times the target operator repeats a work step in a way that exhibits "low skill level", the control unit 11 is more likely to give lower evaluations to the correctness, the stability, the speed, and the rhythm of the execution of each basic operation executed by the target operator, and calculates low performance indexes for the basic operations accordingly. The method of evaluation using each of the indexes is described below. According to the above description, the term "a reference level" was used as the level of a normal skilled operator and the term "a higher level" is used as the level of a skilled operator having a skill level higher than the skill level of the normal skilled operator. However, establishing the level of a skilled operator is not limited to such an example. For example, only a high level may be used for the level of a skilled operator.

(A) Correctness

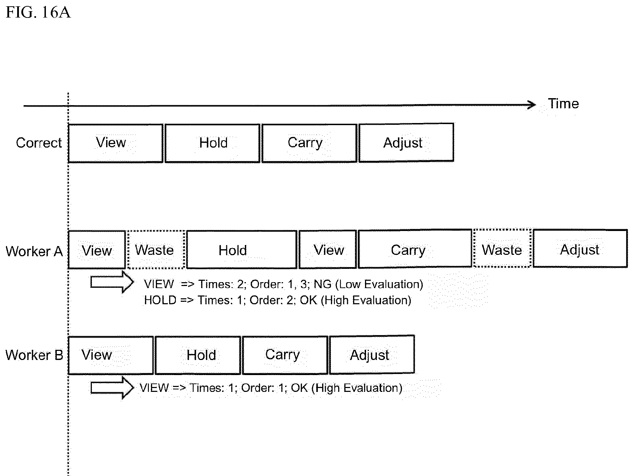

First, the method for evaluating the correctness of executing a basic operation is described with reference to FIG. 16A. FIG. 16A schematically illustrates an example of a method for evaluating the correctness of an execution of a basic operation in the work step illustrated in FIG. 15. The correctness is an index indicating a degree as to whether or not the basic operations were executed in the correct sequence. Therefore, the control unit 11 evaluates the correctness of executing each of the basic operations on the basis of the number of executions and the execution order of the basic operations identified in the third step described above.

For example, in FIG. 16A, a worker A executes the basic operation "View" two times, with each "View" basic operation executed first and third. In contrast, when the basic operations are executed in the correct order, the basic operation "View" is executed first, only once. Therefore, the worker A, makes a mistake in the number of times and the order for executing "View"; thus, the control unit 11 evaluates the correctness of executing "View" for the worker A as low; whereas, worker B executes the basic operation "View" first, and only once. Therefore, the worker B, executes the basic operation "View" in the correct order for the correct number of times; thus, the control unit 11 evaluates the correctness of executing "View" for the worker B as high.

That is, the more number of executions and execution order of each basic operation executed by the target operator deviates from the number of executions and execution order of each basic operation when the target operator suitably accomplishes the work step, the lower the control unit 11 evaluates the correctness of executing each basic operation executed by the target operator. Whereas, the closer the number of executions and execution order of each basic operation executed by the target operator is to the number of executions and execution order of each basic operation when the target operator suitably accomplishes the work step, the higher the control unit 11 evaluates the correctness of executing each basic operation executed by the target operator. In the example in FIG. 16A, while the worker A made errors with respect to the number of executions and the execution order for "View", the worker A has the correct number of executions and correct order for "Hold". Therefore, the control unit 11 evaluates correctness of the execution of "Hold" by worker A as high.

(B) Stability

Next, the method for evaluating the stability of executing a basic operation is described. The stability is a metric indicating a measure of whether or not the basic operations are executed with a uniform procedure for each trial execution when the work step is attempted a plurality of times. Therefore, the control unit 11 evaluates the correctness of executing each of the basic operations in each trial execution on the basis of the number of executions and the execution order of each of the basic operations. Thereafter the control unit 11 evaluates the stability of executing each of the basic operations on the basis of the variations in the correctness in each trial execution. The variation may be expressed via known mathematical methods such as variance, and standard deviation.

For example, if the target operator repeatedly executes each of the basic operations the correct number of times and in the correct order as the worker B in FIG. 16A, then the control unit 11 evaluates the target operator as executing the basic operations with a high stability. Whereas, the larger the variation in the number of executions and the execution order of the basic operations at each trial execution, the lower the control unit 11 evaluates the target operator executing the basic operations in the stability.

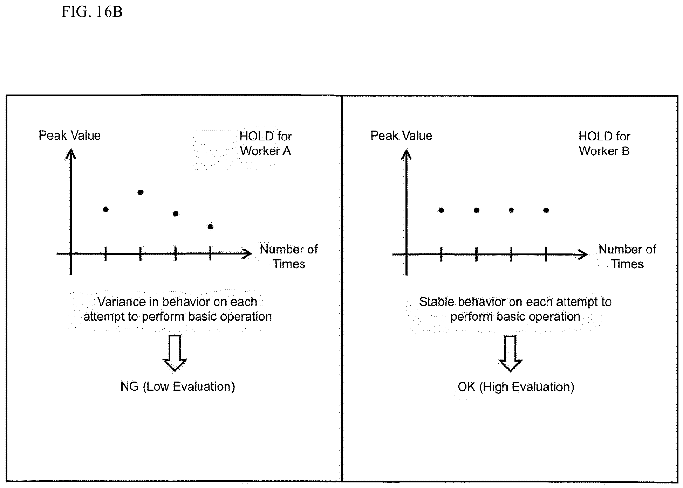

As shown in FIG. 16B, the stability of the execution of each basic operation may be evaluated on the basis of the behavior of the target operator identified by raw movement data or time series feature data. FIG. 16B schematically illustrates an example of a method for evaluating the stability of execution of each basic operation. The graphs of each worker (A, B) in FIG. 16B illustrate the peak value of force when performing "Hold" in each trial execution identified by the time series feature data.

As described above, the higher the ability of executing a work step executed by a target operator, the more uniformly the target operator can execute each basic operation in each trial execution. Therefore, the control unit 11 can evaluate the stability of execution such that the larger the variation of behavior in executing each basic operation, the lower the stability when the target operator executing each basic operation. Whereas, the control unit 11 can evaluate the stability of execution such that the smaller the variation of behavior in executing each basic operation, the higher the stability when the target operator executing each basic operation.

In the example shown in FIG. 16B, the peak values of force fluctuate when a worker A executes "Hold" in each trial execution. Thus, the control unit 11 can evaluate the stability of execution as low when the worker A executes "Hold". Whereas, the peak values of force are uniform when a worker B executes "Hold" in each execution. Thus, the control unit 11 can evaluate that the stability of execution as high when the worker B executes "Hold".

The number of trial executions for evaluating the stability may be established in accordance with the form of implementation. The number of trial executions may be established on the basis of a predetermined period, for example, for one day, for one hour, or the like. Further, the work step according to this embodiment is the work step 40 in a process on a production line, and thus the number of trial executions may be established on the basis of the number of products manufactured through the work step 40.

(C) Speed

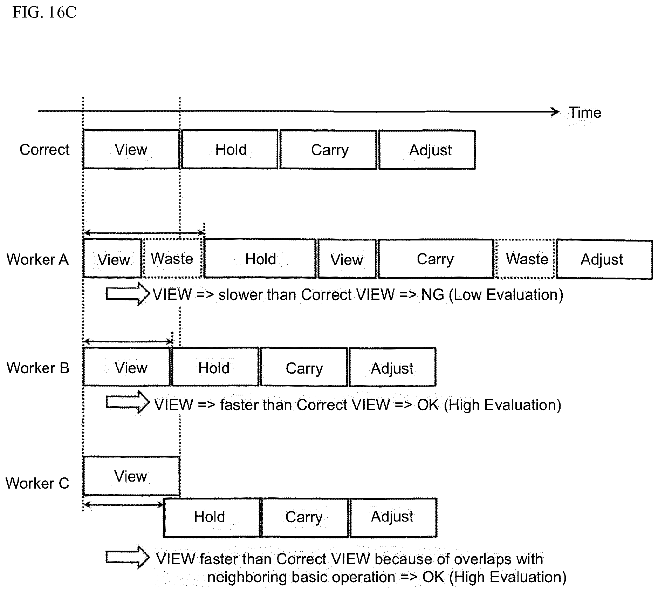

Next, the method for evaluating the speed of executing a basic operation is described with reference to FIG. 16C. FIG. 16C schematically illustrates an example of a method for evaluating the speed of an execution of a basic operation in the work step illustrated in FIG. 15. The speed is a metric indicating a measure of the length of time spent on the basic operations and the overlap with a neighboring basic operation. Therefore, the control unit 11 can evaluate the speed of executing each basic operation on the basis of the execution time and the time overlap in each basis operation identified in the third step described above.

For example, in FIG. 16C, a worker A performs an unnecessary movement between "View" and "Hold", and thus the time the worker A spent in total for the basic operation of "View" is longer than the appropriate time. Thus, the control unit 11 evaluates the speed of executing "View" of the worker A as slow. Whereas, the time a worker B spent for the basic operation of "View" is shorter than the appropriate time. Thus, the control unit 11 evaluates the speed of executing "View" of the worker B as fast. Similarly, a worker C executes partially overlapped "View" and "Hold", and thus the time the worker C spent for only the basic operation of "View" is shorter than the appropriate time. Therefore, the control unit 11 evaluates the speed of executing "View" of the worker C as fast.

That is, the shorter the time actually spent for each basic operation than the appropriate time the faster the control unit 11 evaluates the speed of executing each basic operation of the target operator based on the execution time and time overlap of each basic operation of a target operator. Whereas, the longer the time actually spent for each basic operation than the appropriate time the slower the control unit 11 evaluates the speed of executing each basic operation of the target operator.

Basically, the faster the speed of executing each basic operation, the higher the control unit 11 evaluates the speed of execution. However, as described above, if the speed of executing each basic operation is significantly faster than the appropriate speed, there is a possibility that the execution of each basic operation is insufficient. Therefore, the control unit 11 may determine whether or not the difference between the speed of executing each basic operation of a target operator and the appropriate speed exceeds a threshold, when the speed of executing each basic operation of the target operator is faster than the appropriate speed. When the difference does not exceed the threshold, the control unit 11 may determine that the evaluation of the speed is high. Whereas, when the difference exceeds the threshold, the control unit 11 may evaluate the speed as slow.

(D) Rhythm

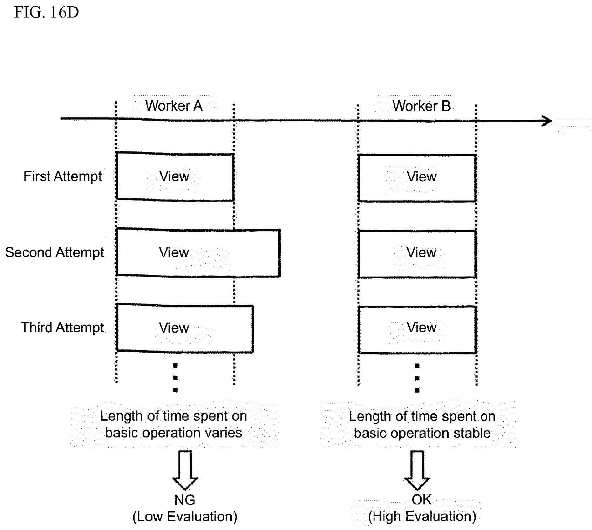

Next, the method for evaluating the rhythm of executing a basic operation is described with reference to FIG. 16D. FIG. 16D schematically illustrates an example of a method for evaluating the rhythm in an execution of a basic operation. The rhythm is a metric indicating a measure of whether or not essentially a fixed time is spent on the basic operations during each trial execution in the case that the work step is attempted a plurality of times. Therefore, the control unit 11 evaluates the speed of executing each basic operation in each trial execution on the basis of the execution time and the time overlap of each basic operation. Thereafter the control unit 11 evaluates the rhythm of executing each basic operation on the basis of the variations in the speed in each trial execution.

For example, in FIG. 16D, the length of the time a worker A spent for "View" fluctuates. Therefore, the control unit 11 evaluates the rhythm of execution of the "View" by the worker A as bad. Whereas, the length of the time a worker B spent for "View" is constant. Therefore, the control unit 11 evaluates the rhythm of execution of the "View" by the worker B as good.

That is, the larger the variation of the speed (the length of the time spent) executing each basic operation when a target operator attempts the work steps a plurality of times, the worse the control unit 11 evaluates the rhythm of the target operator executing each basic operation. Whereas, the smaller the variation of the speed (the length of the time spent) executing each basic operation, the better the control unit 11 evaluates the rhythm of the target operator executing each basic operation.

As described above, the control unit 11 can evaluate the correctness, the stability, the speed, and the rhythm of executing each basic operation on the basis of the execution time, the time overlap, the number of executions, and the execution order of each basic operation identified. In the fourth step, the control unit 11 evaluates at least one of the correctness, the stability, the speed, and the rhythm of executing each basic operation in accordance with the method described above. For example, the control unit 11 evaluates the correctness, the stability, the speed, and the rhythm of executing each basic operation described above. Once the control unit 11 completes evaluating each basic operations, the control unit 11 continues to processing in the next fifth step.

The model behavior of each basic operation included in a work step, that is a correct order and an appropriate time (speed) may be presented as appropriate in accordance with the form of implementation. For example, the correct order and the appropriate time of each basic operation may be provided via input from the operator. Alternatively, the correct order and the appropriate time for each basic operation may be provided by a skilled operator executing the work step. For example, the control unit 11 may identify the correct order and the appropriate time of each basic operation form the movement data acquired from a skilled operator.

Fifth Step

In a fifth step, the control unit 11 calculates a performance index for each basic operation in accordance with the results of evaluation in the fourth step. The higher the correctness, the higher the stability, the faster the speed, and the better the rhythm of executing each basic operation (that is, the higher the evaluation with respect to each basic operation), the higher value the control unit 11 calculates the performance index for each basic operation. Whereas, the lower the correctness, the lower the stability, the slower the speed, and the worse the rhythm of executing each basic operation (that is, the lower the evaluation with respect to each basic operation), the lower value the control unit 11 calculates the performance index for each basic operation.

For example, the reference value for a performance index may be given to a model behavior (for example, a "correct" behavior shown in FIG. 15) of executing each basic operation in the correct order and with the appropriate time. This reference value may be given preliminarily, or may be established by operator's input or the like. The control unit 11 may calculate a performance index for each basic operation from the reference value in accordance with the level of the evaluation for executing each basic operation of a target operator compared to the preliminarily constructed model behavior. That is, the higher the evaluation for executing each basic operation of the target operator compared to the model behavior, the value that is higher than or equal to the reference value the control unit 11 calculates as the performance index for each basic operation. Whereas, the lower the evaluation for executing each basic operation of the target operator compared to the model behavior, the value that is lower than the reference value the control unit 11 calculates as the performance index for each basic operation. A computational model such as the linear regression model, the covariance structure analysis, and the multiple regression analysis may be used for the calculation of the performance index. Further, the performance index may be calculated on the basis of the results of comparison with a threshold obtained by normalizing all data. The model behavior may be given by operator's input or may be given by the movement of a skilled operator as described above.

The reference value for each performance index may be established in accordance with the difficulty of the sensory activities and the physical activities required by each basic operation. For example, assume that there are two work steps, a work step X and a work step Y. Assume that the sensory activities and the physical activities required for "View" in the work step X are, for example, to recognize the state of an object (primary information) on the basis of the feeling transmitted from the object to a finger by touching the object with the finger as performed in the appearance inspection of products or the like. Whereas, assume that the sensory activities and the physical activities required for "View" in the work step Y are, for example, to recognize the state of a second object connected to a first object (secondary information) on the basis of the feeling transmitted from the first object to a finger by touching the first object with the finger as in manipulation or the like.

The difficulty of the sensory activities and the physical activities required for "View" in the work step Y is apparently higher than the difficulty of the sensory activities and the physical activities required for "View" in the work step X. Here, if the same reference value is given to the "View" in the work step X and the "View" in the work step Y respectively, the performance index for the "View" calculated when executing the work step X cannot be simply compared with the performance index for the "View" calculated when executing the work step Y. That is, a target operator capable of executing "View" in work step X with a high performance index cannot always execute "View" in work step Y with the same high performance index as in the work step X.

Therefore, when using a common metric (basic operation) between different work steps to compare the ability of a target operator to accomplish work steps as above described, the standard value for each of the performance indexes is preferably established in accordance with the difficulty of the sensory activity and the physical activity required for each of the basic operations included in each of the work steps. For example, a determination rule for determining the difficulty level of the sensory activities and the physical activities may be established, and the reference value for a performance index established for each basic operation in each work step may be determined on the basis of the determination rule established.

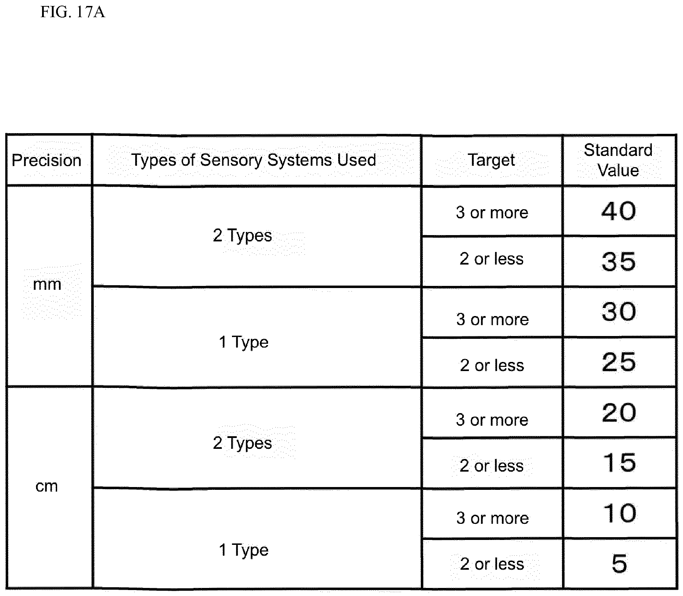

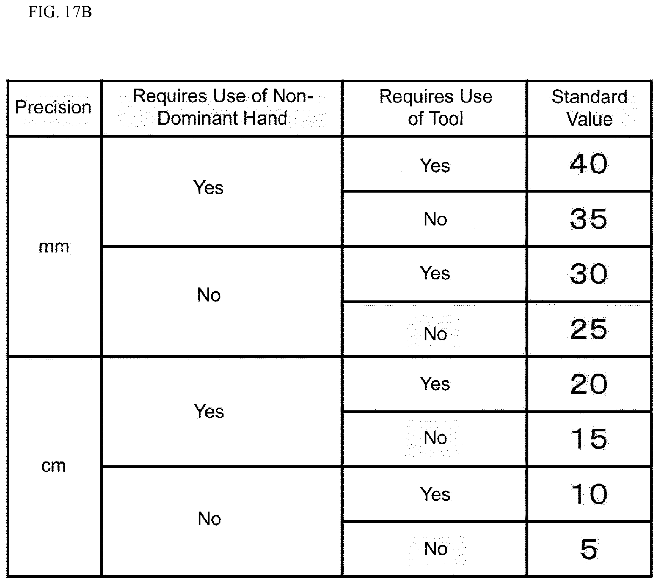

Here, an example of the determination rule is described using FIGS. 17A and 17B. FIG. 17A illustrates an example of the relationship between the difficulty of a sensory activity and a reference value for a performance index. FIG. 17B illustrates an example of the relationship between the difficulty of a physical activity and a reference value for a performance index.

The example of the determination rule in FIG. 17A is configured to evaluate the degree of difficulty of a sensory activity on the basis of three parameters: sensory accuracy; types of sensory systems used, and number objects sensed. That is, the higher the sensory accuracy required, the more the number of types of sensory systems, and the more the number of sensor objects, the higher the difficulty level of a sensory activity. As such, an example of the determination rule in FIG. 17A is configured to give the highest value "40" as the reference value for a performance index with respect to a basic operation in which the sensory accuracy is required by the millimeter; the number of types of used sensory systems is two; and the number of sensory objects is three or more. Whereas, the example of the determination rule in FIG. 17A is configured to give the lowest value "5" as the reference value for a performance index with respect to a basic operation in which the sensory accuracy is required by the centimeter; the number of types of used sensory systems is one; and the number of sensory objects is two or less. The example of the determination rule in FIG. 17A is configured to evaluate the difficulty level of the sensory activity in 8 stages on the basis of three items described above and establish reference values at regular intervals in accordance with each difficulty level.

An example of the determination rule in FIG. 17B is configured to evaluate the degree of difficulty of a physical activity on the basis of three parameters: accuracy in motion of a body part; use or non-use of a non-dominant hand, and use or non-use of a tool. That is, when the accuracy in the motion of a body is high, a non-dominant hand is used, and a tool is used, the difficulty level of a physical activity increases. As such, an example of the determination rule in FIG. 17B is configured to give the highest value "40" as the reference value for a performance index with respect to a basic operation in which the accuracy in the motion of a body is required by the millimeter; a non-dominant hand is used; and a tool is used. Whereas, the example of the determination rule in FIG. 17B is configured to give the lowest value "5" as the reference value for a performance index with respect to a basic operation in which the accuracy in the motion of a body is required by the centimeter; a non-dominant hand is not used; and a tool is not used. The example of the determination rule in FIG. 17B is configured to evaluate the difficulty level of the physical activity in 8 stages on the basis of three items described above and establish reference values at regular intervals in accordance with each difficulty level similarly to the example of the determination rule in FIG. 17A.

The control unit 11 can determine the reference value for the performance index established for each basic operation in each work step in accordance with the difficulty level of each basic operation by using each determination rule illustrated in FIGS. 17A and 17B. For example, when using both determination rules, the control unit 11 evaluates each difficulty level of the sensory activity and the physical activity on the basis of each determination rule and can establish, for each basic operation, a reference value for the performance index in accordance with the difficulty level of each basic operation by adding the reference values derived from each determination rule. The control unit 11 then calculates a performance index for each basic operation using the reference value established for each basic operation included in each work step in accordance with the results of evaluation in the fourth step.

However, the items for evaluating the difficulty level of the sensory activity and the physical activity is not limited to these examples, and may be established as appropriate in accordance with the form of implementation. For example, an object to be recognized (primary information or secondary information), and a recognition site (for example, inside state or outside state of an object) may be listed as items other than the previously described items for evaluating the difficulty level of the sensory activity. Whereas, the number of body sites to be driven, a driving period and so forth can be listed as items other than the previously described items for evaluating the difficulty level of the physical activity. The correspondence relationship between the difficulty level of the sensory activity and the physical activity and the reference value for a performance index may not be limited to the examples shown in FIGS. 17A, 17B, and may be established as appropriate in accordance with evaluation items.

Sixth Step

In a sixth step, the control unit 11 derives the skill level of the target operator 50 from the performance index for each basic operation. For example, the control unit 11 may calculate the skill level by adding together the performance indexes for basic operations. When adding up the performance indexes, the control unit 11 may weight the performance index for each basic operation. Further, for example, the control unit 11 may handle the performance index for each basic operation as a skill level as is. In this case, the skill level is constituted by the performance index for each basic operation.

The control unit 11 can objectively and quantitatively calculate a skill level by analyzing movement data through a series of processing that includes the first to sixth steps as described above. Once the control unit 11 calculates the skill level, the control unit 11 executes the processing in the steps S103 through S110. Thereby, the work support device 1 can allow the target operator 50 to efficiently master the work step 40 similarly to the embodiments described above.

A series of arithmetic processing in the first to sixth steps may be modeled. That is, the control unit 11 may derive a skill level from movement data directly by using a computational model. A supervised learning model trained via machine learning may be used as the computational model that derives the skill level of a worker from the movement data. This machine learning uses, for example, a dataset constituted by combining movement data that is a sample (training data) and correct data exhibiting a skill level derived from the sample. The learning model is constituted by, for example, a neural network, support vector machine or the like. The learning model is trained via a publicly known learning algorithm such as a backpropagation algorithm to output correct data corresponding to an input sample when a sample is input. Thereby, the supervised learning model trains to output a skill level derived from movement data upon receiving the movement data.

Reference Numerals

| | |
|---|---|
| 1 | Work support device |
| 11 | Control unit |
| 12 | Storage unit |
| 13 | External interface |
| 14 | Input device, |
| 15 | Output device, |
| 16 | Drive |
| 111 | First acquisition unit |
| 112 | Skill-level calculation unit |
| 113 | Second acquisition unit |
| 114 | Instruction determination unit |
| 115 | Output unit |
| 116 | Skill acquisition determination unit |
| 117 | Registration unit |
| 30 | Camera |
| 31 | Load cell |
| 32 | Electrooculography sensor |
| 40 | Work step |
| 45 | Infrared sensor |
| 50 | Target operator |
| 55 | Movement data |
| 60 | Learning process database |
| 65 | Instruction database |
| 70 | Movement data (model operator) |
| 80 | Work support program |
| 90 | Storage medium |

**Claims**

1. A work support device (1) comprising: a first acquisition unit (111) configured to acquire movement data generated by using one or a plurality of sensors (30; 31; 32) to measure the movement of a target operator (50) performing a work step (40);
a skill-level calculation unit (112) configured to calculate the skill level of the target operator (50) with respect to the work step (40) by analyzing the movement data acquired, the skill level indicating a degree on a spectrum of whether or not the target operator (50) can suitably accomplish the work step (40);

a second acquisition unit (113) configured to acquire the movement data of a model operator at a skill level higher than or equal to the skill level calculated for the target operator (50) by accessing a database (60) that stores the movement data of the model operator for each skill level, the movement data acquired throughout the process of a model operator achieving the skill level at which the model operator can suitably accomplish the work step (40); wherein the difference between the skill level of the model operator and the skill level of the target operator (50) is within a predetermined range;

an instruction determination unit (114) configured to compare the movement data acquired for the model operator with the movement data of the target operator (50) and determine an instruction that allows the movement of the target operator to approach the movement of the model operator with respect to the work step (40) on the basis of the results of comparison; and

an output unit (115) configured to output information associated with the instruction determined.

2. The work support device (1) according to claim 1, wherein the first acquisition unit (111) acquires other movement data generated using the one or plurality of sensors to measure the movement of the target operator (50) performing the work step (40) after the output unit (115) outputs the information associated with the instruction;

the work support device (1) further including: a skill acquisition determination unit (116) configured to analyze the other movement data acquired and determine whether or not the target operator (50) learned the movement with respect to the work step (40) in accordance with the instruction; and

the output unit (115) repeats the output of the information associated with the instruction until the skill acquisition determination unit (116) determines that the target operator (50) learned the movement with respect to the work step in accordance with the instruction.

3. The work support device (1) according to claim 1 or 2, wherein the movement data is made up of a plurality of feature amounts associated with the movements with respect to the work step; and

the instruction determination unit (114):

identifies one or a plurality of feature amounts exhibiting a large difference between the target operator (50) and the model operator on the basis of the results of comparison; and

determines the instruction in accordance with the difference between the target operator (50) and the model operator in each one or the plurality of feature amounts identified.

4. The work support device (1) according to any one of claims 1 to 3, wherein the work step includes a plurality of basic operations;

the instruction determination unit (114):

compares the movement data of the model operator with the movement data of the target operator (50) for each basic operation; and

determines the instruction with respect to at least one of the plurality of basic operations.

5. The work support device (1) according to claims 4, wherein each basic operation is defined to include at least one cycle of human cognitive information processing;

the first acquisition unit (111) acquires movement data generated by using a plurality of sensors to measure the sensory activity and physical activity of the target operator; and

analyzes the movement data includes evaluating at least one of the accuracy, speed, stability and the rhythm of each basic operation; and

the skill-level calculation unit (112) calculates the skill level in accordance with the results of the evaluation.

6. The work support device (1) according to claim 5, wherein the skill-level calculation unit (112):

calculates a performance index for each basic operation in accordance with the results of evaluation; and

calculates the skill level by adding together the performance indexes for the basic operations.

7. The work support device (1) according to claim 6, wherein a reference value for the performance index with respect to each basic operation is established in accordance with the difficulty of the sensory activity and the physical activity; and

the skill-level calculation unit (112) calculates the performance index with respect to each basic operation from the reference value by comparing the behavior of the target operator (50) with a preliminarily constructed model behavior and in accordance with the degree of evaluation for the performance of each basic operation of the target operator (50) .

8. The work support device (1) according to any one of claims 1 to 4, wherein the skill-level calculation unit (112) :

measures the actual period from start to finish of the work step; and
calculates the skill level in accordance with the ratio of the measured actual period to the predetermined standard period.

9. The work support device (1) according to any one of claims 1 to 8, wherein the second acquisition unit (113) acquires the average movement data generated by averaging the movement data of a plurality of skilled operators capable of suitably accomplishing the work step (40) as the movement data of the model operator.

10. The work support device (1) according to any one of claims 1 to 8, wherein the database (60) stores a plurality of pieces of movement data each corresponding to a skilled operator from a plurality of skilled operators capable of suitably accomplishing the work step (40) as the movement data of the model operator;
the second acquisition unit (113):

selects the movement data of any one of the skilled operators from the plurality of pieces of movement data stored in the database (60); and
acquires the selected movement data of the skilled operator as the movement data of the model operator.

11. The work support device (1) according to claim 10, wherein the second acquisition unit (113) selects the movement data of the skilled operator spending the least time for achieving the skill level for suitably accomplishing the work step (40).

12. The work support device (1) according to claim 10, wherein the second acquisition unit (113) selects the movement data of the skilled operator whose type is similar to the type of the target operator (50).

13. The work support device (1) according to claim 10, wherein the second acquisition unit (113) selects the skilled operator whose movement data is most frequently referenced from among the plurality of movement data stored in the database (60).

14. A work support method that causes a computer to execute steps comprising:

acquiring movement data generated by using one or a plurality of sensors to measure the movement of a target operator performing a work step (S101);
calculating a skill level of the target operator with respect to the work step by analyzing the movement data acquired, the skill level indicating a degree on a spectrum of whether or not the target operator can suitably accomplish the work step (S102);
acquiring the movement data of a model operator at a skill level higher than or equal to the skill level calculated for the target operator by accessing a database that stores the movement data of the model operator for each skill level, the movement data acquired throughout the process of the model operator achieving the skill level at which the model operator can suitably accomplish the work step (S103);
wherein the difference between the skill level of the model operator and the skill level of the target operator (50) is within a predetermined range
comparing the movement data of the model operator with the movement data of the target operator (S104);
determining an instruction that allows the movement of the target operator to approach the movement of the model operator with respect to the work step on the basis of the results of comparison (S105, S201, S202, S203, S204, S205); and
output of information associated with the instruction determined (S106).

15. A work support program (80) that causes a computer to execute steps comprising:

acquiring movement data generated by using one or a plurality of sensors to measure the movement of a target operator performing a work step (S101);
calculating a skill level of the target operator with respect to the work step by analyzing the movement data acquired, the skill level indicating a degree on a spectrum of whether or not the target operator can suitably accomplish the work step (S102);

acquiring the movement data of a model operator at a skill level higher than or equal to the skill level calculated for the target operator by accessing a database that stores the movement data of the model operator for each skill level, the movement data acquired throughout the process of the model operator achieving the skill level at which the model operator can suitably accomplish the work step (S103);

wherein the difference between the skill level of the model operator and the skill level of the target operator (50) is within a predetermined range

comparing the movement data of the model operator with the movement data of the target operator (S104);

determining an instruction that allows the movement of the target operator to approach the movement of the model operator with respect to the work step on the basis of the results of comparison (S105, S201, S202, S203, S204, S205); and

output of information associated with the instruction determined (S106).

**Patentansprüche**

1. Arbeitsunterstützungsvorrichtung (1), umfassend: eine erste Erfassungseinheit (111), die konfiguriert ist, um Bewegungsdaten zu erfassen, die durch Verwendung eines oder einer Vielzahl von Sensoren (30; 31; 32) erzeugt werden, um die Bewegung einer Ziel-Bedienperson (50), die einen Arbeitsschritt (40) durchführt, zu messen;

eine Fertigkeitsniveau-Berechnungseinheit (112), die konfiguriert ist, um das Fertigkeitsniveau der Ziel-Bedienperson (50) in Bezug auf den Arbeitsschritt (40) durch Analysieren der erfassten Bewegungsdaten zu berechnen, wobei das Fertigkeitsniveau einen Grad auf einem Spektrum angibt, ob die Ziel-Bedienperson (50) den Arbeitsschritt (40) angemessen ausführen kann oder nicht;

eine zweite Erfassungseinheit (113), die konfiguriert ist, um die Bewegungsdaten einer Modell-Bedienperson auf einem Fertigkeitsniveau zu erfassen, das höher oder gleich dem Fertigkeitsniveau ist, das für die Ziel-Bedienperson (50) berechnet wurde, indem sie auf eine Datenbank (60) zugreift, die die Bewegungsdaten der Modell-Bedienperson für jedes Fertigkeitsniveau speichert, wobei die Bewegungsdaten während des gesamten Prozesses von einer Modell-Bedienperson erfasst werden, die das Fertigkeitsniveau erreicht, auf dem die Modell-Bedienperson den Arbeitsschritt (40) angemessen ausführen kann;

wobei die Differenz zwischen dem Fertigkeitsniveau der Modell-Bedienperson und dem Fertigkeitsniveau der Ziel-Bedienperson (50) innerhalb eines vorgegebenen Bereichs liegt;

eine Anweisungsbestimmungseinheit (114), die konfiguriert ist, um die für die Modell-Bedienperson erfassten Bewegungsdaten mit den Bewegungsdaten der Ziel-Bedienperson (50) zu vergleichen und auf der Grundlage der Ergebnisse des Vergleichs eine Anweisung zu bestimmen, die es ermöglicht, dass sich die Bewegung der Ziel-Bedienperson der Bewegung der Modell-Bedienperson in Bezug auf den Arbeitsschritt (40) annähert; und

eine Ausgabeeinheit (115), die konfiguriert ist, um Informationen auszugeben, die der bestimmten Anweisung zugeordnet sind.

2. Arbeitsunterstützungsvorrichtung (1) nach Anspruch 1, wobei die erste Erfassungseinheit (111) andere Bewegungsdaten erfasst, die unter Verwendung des einen oder der Vielzahl von Sensoren erzeugt werden, um die Bewegung der Ziel-Bedienperson (50), die den Arbeitsschritt (40) durchführt, zu messen, nachdem die Ausgabeeinheit (115) die der Anweisung zugeordneten Informationen ausgegeben hat;

wobei die Arbeitsunterstützungsvorrichtung (1), weiter einschließt: eine Fertigkeitserwerbs-Bestimmungseinheit (116), die konfiguriert ist, um die anderen erfassten Bewegungsdaten zu analysieren und zu bestimmen, ob die Ziel-Bedienperson (50) die Bewegung in Bezug auf den Arbeitsschritt (40) gemäß der Anweisung gelernt hat oder nicht; und

die Ausgabeeinheit (115) die Ausgabe der Informationen, die der Anweisung zugeordnet sind, wiederholt, bis die Fertigkeitserwerbs-Bestimmungseinheit (116) bestimmt, dass die Ziel-Bedienperson (50) die Bewegung in Bezug auf den Arbeitsschritt gemäß der Anweisung gelernt hat.

3. Arbeitsunterstützungsvorrichtung (1) nach Anspruch 1 oder 2, wobei sich die Bewegungsdaten aus einer Vielzahl von Merkmalsbeträgen zusammensetzen, die den Bewegungen in Bezug auf den Arbeitsschritt zugeordnet sind; und die Anweisungsbestimmungseinheit (114):

auf der Grundlage der Ergebnisse des Vergleichs einen oder eine Vielzahl von Merkmalsbeträgen identifiziert, die eine große Differenz zwischen der Ziel-Bedienperson (50) und der Modell-Bedienperson aufzeigen; und die Anweisung gemäß der Differenz zwischen der Ziel-Bedienperson (50) und der Modell-Bedienperson in jedem oder der Vielzahl von identifizierten Merkmalsbeträgen bestimmt.

4. Arbeitsunterstützungsvorrichtung (1) nach einem der Ansprüche 1 bis 3, wobei der Arbeitsschritt eine Vielzahl von Grundoperationen einschließt;
die Anweisungsbestimmungseinheit (114):

    die Bewegungsdaten der Modell-Bedienperson mit den Bewegungsdaten der Ziel-Bedienperson (50) für jede Grundoperation vergleicht; und
    die Anweisung in Bezug auf mindestens eine der Vielzahl von Grundoperationen bestimmt.

5. Arbeitsunterstützungsvorrichtung (1) nach Ansprüche 4, wobei jede Grundoperation so definiert ist, dass sie mindestens einen Zyklus kognitiver Informationsverarbeitung des Menschen einschließt;
die erste Erfassungseinheit (111) Bewegungsdaten erfasst, die durch Verwendung einer Vielzahl von Sensoren erzeugt werden, um die sensorische Aktivität und die körperliche Aktivität der Ziel-Bedienperson zu messen; und
die Bewegungsdaten analysiert, was die Bewertung von mindestens einer/einem von Genauigkeit, Geschwindigkeit, Stabilität und Rhythmus jeder Grundoperation einschließt; und
die Fertigkeitsniveau-Berechnungseinheit (112) das Fertigkeitsniveau gemäß den Ergebnissen der Bewertung berechnet.

6. Arbeitsunterstützungsvorrichtung (1) nach Anspruch 5, wobei die Fertigkeitsniveau-Berechnungseinheit (112):

    einen Leistungsindex für jede Grundoperation gemäß den Ergebnissen der Bewertung berechnet; und
    das Fertigkeitsniveau berechnet, indem sie die Leistungsindizes für die Grundoperationen addiert.

7. Arbeitsunterstützungsvorrichtung nach Anspruch 6, wobei ein Referenzwert für den Leistungsindex in Bezug auf jede Grundoperation gemäß der Schwierigkeit der sensorischen Aktivität und der körperlichen Aktivität festgelegt wird; und
die Fertigkeitsniveau-Berechnungseinheit (112) den Leistungsindex in Bezug auf jede Grundoperation aus dem Referenzwert berechnet, indem sie das Verhalten der Ziel-Bedienperson (50) mit einem vorläufig konstruierten Modellverhalten und gemäß dem Grad der Bewertung für die Leistung jeder Grundoperation der Ziel-Bedienperson (50) vergleicht.

8. Arbeitsunterstützungsvorrichtung (1) nach einem der Ansprüche 1 bis 4, wobei Fertigkeitsniveau-Berechnungseinheit (112):

    die tatsächliche Zeitspanne von Anfang bis Ende des Arbeitsschritts misst; und
    das Fertigkeitsniveau gemäß dem Verhältnis der gemessenen tatsächlichen Zeitspanne zu der vorbestimmten Standard-Zeitspanne berechnet.

9. Arbeitsunterstützungsvorrichtung (1) nach einem der Ansprüche 1 bis 8, wobei die zweite Erfassungseinheit (113) die durchschnittlichen Bewegungsdaten, die durch Mittelwertbildung der Bewegungsdaten einer Vielzahl geübter Bedienpersonen, die in der Lage sind, den Arbeitsschritt (40) angemessen auszuführen, erzeugt werden, als die Bewegungsdaten der Modell-Bedienperson erfasst.

10. Arbeitsunterstützungsvorrichtung (1) nach einem der Ansprüche 1 bis 8, wobei in der Datenbank (60) eine Vielzahl von Bewegungsdatenteilen, die jeweils einer geübten Bedienperson aus einer Vielzahl von geübten Bedienpersonen entsprechen, die in der Lage sind, den Arbeitsschritt (40) angemessen auszuführen, als die Bewegungsdaten der Modell-Bedienperson gespeichert sind;
die zweite Erfassungseinheit (113):

    die Bewegungsdaten einer beliebigen der geübten Bedienpersonen aus der Vielzahl von in der Datenbank (60) gespeicherten Bewegungsdatenteilen auswählt; und
    die ausgewählten Bewegungsdaten der geübten Bedienperson als die Bewegungsdaten der Modell-Bedienperson erfasst.

11. Arbeitsunterstützungsvorrichtung (1) nach Anspruch 10, wobei die zweite Erfassungseinheit (113) die Bewegungsdaten der geübten Bedienperson auswählt, die die geringste Zeit zum Erreichen des Fertigkeitsniveaus für die angemessene Ausführung des Arbeitsschritts (40) aufwendet.

12. Arbeitsunterstützungsvorrichtung (1) nach Anspruch 10, wobei die zweite Erfassungseinheit (113) die Bewegungsdaten der geübten Bedienperson auswählt, deren Typ dem Typ der Ziel-Bedienperson (50) ähnlich ist.

13. Arbeitsunterstützungsvorrichtung (1) nach Anspruch 10, wobei die zweite Erfassungseinheit (113) aus der Vielzahl von in der Datenbank (60) gespeicherten Bewegungsdaten diejenige geübte Bedienperson auswählt, deren Bewegungsdaten am häufigsten referenziert werden.

14. Arbeitsunterstützungsverfahren, das einen Computer veranlasst, Schritte abzuarbeiten, die Folgendes umfassen:

Erfassen von Bewegungsdaten, die durch Verwendung eines oder einer Vielzahl von Sensoren erzeugt werden, um die Bewegung einer Ziel-Bedienperson zu messen, die einen Arbeitsschritt durchführt (S101);
Berechnen eines Fertigkeitsniveaus der Ziel-Bedienperson in Bezug auf den Arbeitsschritt durch Analysieren der erfassten Bewegungsdaten, wobei das Fertigkeitsniveau einen Grad auf einem Spektrum angibt, ob die Ziel-Bedienperson den Arbeitsschritt angemessen ausführen kann oder nicht (S102);
Erfassen der Bewegungsdaten einer Modell-Bedienperson auf einem Fertigkeitsniveau, das höher oder gleich dem für die Ziel-Bedienperson berechneten Fertigkeitsniveau ist, durch Zugreifen auf eine Datenbank, die die Bewegungsdaten der Modell-Bedienperson für jedes Fertigkeitsniveau speichert, wobei die Bewegungsdaten während des gesamten Prozesses von der Modell-Bedienperson erfasst werden, die das Fertigkeitsniveau erreicht, auf dem die Modell-Bedienperson den Arbeitsschritt angemessen ausführen kann (S103);
wobei die Differenz zwischen dem Fertigkeitsniveau der Modell-Bedienperson und dem Fertigkeitsniveau der Ziel-Bedienperson (50) innerhalb eines vorgegebenen Bereichs liegt
Vergleichen der Bewegungsdaten der Modell-Bedienperson mit den Bewegungsdaten der Ziel-Bedienperson (S104);
Bestimmen einer Anweisung, die es ermöglicht, dass sich die Bewegung der Ziel-Bedienperson der Bewegung der Modell-Bedienperson in Bezug auf den Arbeitsschritt annähert, auf der Grundlage der Ergebnisse des Vergleichs (S105, S201, S202, S203, S204, S205); und
Ausgabe von der bestimmten Anweisung zugeordneten Informationen (S106).

15. Arbeitsunterstützungsprogramm (80), das einen Computer veranlasst, Schritte abzuarbeiten, die Folgendes umfassen:

Erfassen von Bewegungsdaten, die durch Verwendung eines oder einer Vielzahl von Sensoren erzeugt werden, um die Bewegung einer Ziel-Bedienperson zu messen, die einen Arbeitsschritt durchführt (S101);
Berechnen eines Fertigkeitsniveaus der Ziel-Bedienperson in Bezug auf den Arbeitsschritt durch Analysieren der erfassten Bewegungsdaten, wobei das Fertigkeitsniveau einen Grad auf einem Spektrum angibt, ob die Ziel-Bedienperson den Arbeitsschritt angemessen ausführen kann oder nicht (S102);
Erfassen der Bewegungsdaten einer Modell-Bedienperson auf einem Fertigkeitsniveau, das höher oder gleich dem für die Ziel-Bedienperson berechneten Fertigkeitsniveau ist, durch Zugreifen auf eine Datenbank, die die Bewegungsdaten der Modell-Bedienperson für jedes Fertigkeitsniveau speichert, wobei die Bewegungsdaten während des gesamten Prozesses von der Modell-Bedienperson erfasst werden, die das Fertigkeitsniveau erreicht, auf dem die Modell-Bedienperson den Arbeitsschritt angemessen ausführen kann (S103);
wobei die Differenz zwischen dem Fertigkeitsniveau der Modell-Bedienperson und dem Fertigkeitsniveau der Ziel-Bedienperson (50) innerhalb eines vorgegebenen Bereichs liegt
Vergleichen der Bewegungsdaten der Modell-Bedienperson mit den Bewegungsdaten der Ziel-Bedienperson (S104);
Bestimmen einer Anweisung, die es ermöglicht, dass sich die Bewegung der Ziel-Bedienperson der Bewegung der Modell-Bedienperson in Bezug auf den Arbeitsschritt annähert, auf der Grundlage der Ergebnisse des Vergleichs (S105, S201, S202, S203, S204, S205); und
Ausgabe von der bestimmten Anweisung zugeordneten Informationen (S106).

**Revendications**

1. Dispositif de support de travail (1) comprenant : une première unité d'acquisition (111) configurée pour acquérir des données de mouvement générées en utilisant un ou une pluralité de capteurs (30 ; 31 ; 32) pour mesurer le mouvement d'un opérateur cible (50) réalisant une étape de travail (40) ;
une unité de calcul de niveau d'habileté (112) configurée pour calculer le niveau d'habileté de l'opérateur cible (50) par rapport à l'étape de travail (40) en analysant les données de mouvement acquises, le niveau d'habileté indiquant un degré sur un spectre concernant si oui ou non l'opérateur cible (50) peut accomplir convenablement l'étape de travail (40) ;

une seconde unité d'acquisition (113) configurée pour acquérir les données de mouvement d'un opérateur modèle à un niveau d'habileté supérieur ou égal au niveau d'habileté calculé pour l'opérateur cible (50) en accédant à une base de données (60) qui stocke les données de mouvement de l'opérateur modèle pour chaque niveau d'habileté, les données de mouvement étant acquises tout au long du processus d'un opérateur modèle atteignant le niveau d'habileté auquel l'opérateur modèle peut accomplir convenablement l'étape de travail (40) ;

dans lequel la différence entre le niveau d'habileté de l'opérateur modèle et le niveau d'habileté de l'opérateur cible (50) est dans une plage prédéterminée ;

une unité de détermination d'instruction (114) configurée pour comparer les données de mouvement acquises pour l'opérateur modèle aux données de mouvement de l'opérateur cible (50) et déterminer une instruction qui permet au mouvement de l'opérateur cible d'approcher le mouvement de l'opérateur modèle par rapport à l'étape de travail (40) sur la base des résultats de comparaison ; et

une unité d'émission (115) configurée pour émettre des informations associées à l'instruction déterminée.

2. Dispositif de support de travail (1) selon la revendication 1, dans lequel la première unité d'acquisition (111) acquiert d'autres données de mouvement générées en utilisant l'un ou la pluralité de capteurs pour mesurer le mouvement de l'opérateur cible (50) réalisant l'étape de travail (40) après que l'unité d'émission (115) a émis les informations associées à l'instruction ;

le dispositif de support de travail (1) incluant en outre : une unité de détermination d'acquisition d'habileté (116) configurée pour analyser les autres données de mouvement acquises et déterminer si oui ou non l'opérateur cible (50) a appris le mouvement par rapport à l'étape de travail (40) conformément à l'instruction ; et

l'unité d'émission (115) répète l'émission des informations associées à l'instruction jusqu'à ce que l'unité de détermination d'acquisition d'habileté (116) détermine que l'opérateur cible (50) a appris le mouvement par rapport à l'étape de travail conformément à l'instruction.

3. Dispositif de support de travail (1) selon la revendication 1 ou 2, dans lequel les données de mouvement sont constituées d'une pluralité de quantités de caractéristique associées aux mouvements par rapport à l'étape de travail ; et

l'unité de détermination d'instruction (114) :

identifie une ou une pluralité de quantités de caractéristique montrant une grande différence entre l'opérateur cible (50) et l'opérateur modèle sur la base des résultats de comparaison ; et

détermine l'instruction conformément à la différence entre l'opérateur cible (50) et l'opérateur modèle dans chacune ou la pluralité de quantités de caractéristique identifiées.

4. Dispositif de support de travail (1) selon l'une quelconque des revendications 1 à 3, dans lequel l'étape de travail inclut une pluralité d'opérations de base ;

l'unité de détermination d'instruction (114) :

compare les données de mouvement de l'opérateur modèle aux données de mouvement de l'opérateur cible (50) pour chaque opération de base ; et

détermine l'instruction par rapport à au moins une de la pluralité d'opérations de base.

5. Dispositif de support de travail (1) selon les revendications 4, dans lequel chaque opération de base est définie pour inclure au moins un cycle de traitement d'informations cognitives humaines ;

la première unité d'acquisition (111) acquiert des données de mouvement générées en utilisant une pluralité de capteurs pour mesurer l'activité sensorielle et l'activité physique de l'opérateur cible ; et

analyse les données de mouvement inclut une évaluation d'au moins un de la précision, la vitesse, la stabilité et le rythme de chaque opération de base ; et

l'unité de calcul de niveau d'habileté (112) calcule le niveau d'habileté conformément aux résultats de l'évaluation.

6. Dispositif de support de travail (1) selon la revendication 5, dans lequel l'unité de calcul de niveau d'habileté (112) :

calcule un indice de performance pour chaque opération de base conformément aux résultats d'évaluation ; et

calcule le niveau d'habileté en additionnant les indices de performance pour les opérations de base.

7. Dispositif de support de travail (1) selon la revendication 6, dans lequel une valeur de référence pour l'indice de performance par rapport à chaque opération de base est établie conformément à la difficulté de l'activité sensorielle et de l'activité physique ; et

l'unité de calcul de niveau d'habileté (112) calcule l'indice de performance par rapport à chaque opération de base à partir de la valeur de référence en comparant le comportement de l'opérateur cible (50) à un comportement modèle construit au préalable et conformément au degré d'évaluation pour la réalisation de chaque opération de base de l'opérateur cible (50).

8. Dispositif de support de travail (1) selon l'une quelconque des revendications 1 à 4, dans lequel l'unité de calcul de niveau d'habileté (112) :

   mesure la période réelle du début à la fin de l'étape de travail ; et
   calcule le niveau d'habileté conformément au rapport de la période réelle mesurée sur la période standard prédéterminée.

9. Dispositif de support de travail (1) selon l'une quelconque des revendications 1 à 8, dans lequel la seconde unité d'acquisition (113) acquiert les données de mouvement moyennes générées en faisant la moyenne des données de mouvement d'une pluralité d'opérateurs habiles capables d'accomplir convenablement l'étape de travail (40) en tant que données de mouvement de l'opérateur modèle.

10. Dispositif de support de travail (1) selon l'une quelconque des revendications 1 à 8, dans lequel la base de données (60) stocke une pluralité d'éléments de données de mouvement correspondant chacun à un opérateur qualifié provenant d'une pluralité d'opérateurs qualifiés capables d'accomplir convenablement l'étape de travail (40) en tant que données de mouvement de l'opérateur modèle ;
la seconde unité d'acquisition (113) :

   sélectionne les données de mouvement de l'un quelconque des opérateurs qualifiés à partir de la pluralité d'éléments de données de mouvement stockés dans la base de données (60) ; et
   acquiert les données de mouvement sélectionnées de l'opérateur qualifié en tant que données de mouvement de l'opérateur modèle.

11. Dispositif de support de travail (1) selon la revendication 10, dans lequel la seconde unité d'acquisition (113) sélectionne les données de mouvement de l'opérateur qualifié ayant besoin du moins de temps pour atteindre le niveau d'habileté permettant d'accomplir convenablement l'étape de travail (40).

12. Dispositif de support de travail (1) selon la revendication 10, dans lequel la seconde unité d'acquisition (113) sélectionne les données de mouvement de l'opérateur qualifié dont un type est similaire au type de l'opérateur cible (50).

13. Dispositif de support de travail (1) selon la revendication 10, dans lequel la seconde unité d'acquisition (113) sélectionne l'opérateur qualifié dont des données de mouvement sont les plus fréquemment référencées parmi la pluralité de données de mouvement stockées dans la base de données (60).

14. Procédé de support de travail qui amène un ordinateur à exécuter des étapes comprenant :

   une acquisition de données de mouvement générées en utilisant un ou une pluralité de capteurs pour mesurer le mouvement d'un opérateur cible réalisant une étape de travail (S101) ;
   un calcul d'un niveau d'habileté de l'opérateur cible par rapport à l'étape de travail en analysant les données de mouvement acquises, le niveau d'habileté indiquant un degré sur un spectre concernant si oui ou non l'opérateur cible peut accomplir convenablement l'étape de travail (S102) ;
   une acquisition des données de mouvement d'un opérateur modèle à un niveau d'habileté supérieur ou égal au niveau d'habileté calculé pour l'opérateur cible en accédant à une base de données qui stocke les données de mouvement de l'opérateur modèle pour chaque niveau d'habileté, les données de mouvement étant acquises tout au long du processus de l'opérateur modèle atteignant le niveau d'habileté auquel l'opérateur modèle peut accomplir convenablement l'étape de travail (S103) ;
   dans lequel la différence entre le niveau d'habileté de l'opérateur modèle et le niveau d'habileté de l'opérateur cible (50) est dans une plage prédéterminée
   une comparaison des données de mouvement de l'opérateur modèle aux données de mouvement de l'opérateur cible (S104) ;
   une détermination d'une instruction qui permet au mouvement de l'opérateur cible d'approcher le mouvement de l'opérateur modèle par rapport à l'étape de travail sur la base des résultats de comparaison (S105, S201, S202, S203, S204, S205) ; et

une émission d'informations associées à l'instruction déterminée (S106).

**15.** Programme de support de travail (80) qui amène un ordinateur à exécuter des étapes comprenant :

une acquisition de données de mouvement générées en utilisant un ou une pluralité de capteurs pour mesurer le mouvement d'un opérateur cible réalisant une étape de travail (S101) ;

un calcul d'un niveau d'habileté de l'opérateur cible par rapport à l'étape de travail en analysant les données de mouvement acquises, le niveau d'habileté indiquant un degré sur un spectre concernant si oui ou non l'opérateur cible peut accomplir convenablement l'étape de travail (S102);

une acquisition des données de mouvement d'un opérateur modèle à un niveau d'habileté supérieur ou égal au niveau d'habileté calculé pour l'opérateur cible en accédant à une base de données qui stocke les données de mouvement de l'opérateur modèle pour chaque niveau d'habileté, les données de mouvement étant acquises tout au long du processus de l'opérateur modèle atteignant le niveau d'habileté auquel l'opérateur modèle peut accomplir convenablement l'étape de travail (S103) ;

dans lequel la différence entre le niveau d'habileté de l'opérateur modèle et le niveau d'habileté de l'opérateur cible (50) est dans une plage prédéterminée

une comparaison des données de mouvement de l'opérateur modèle aux données de mouvement de l'opérateur cible (S104) ;

une détermination d'une instruction qui permet au mouvement de l'opérateur cible d'approcher le mouvement de l'opérateur modèle par rapport à l'étape de travail sur la base des résultats de comparaison (S105, S201, S202, S203, S204, S205) ; et

une émission d'informations associées à l'instruction déterminée (S106).

FIG. 1

FIG. 2

FIG. 3

FIG. 4

Work Support Device

1

First Acquisition Unit ~111

Skill-Level Calculation Unit ~112

Second Acquisition Unit ~113

Instruction Determination Unit ~114

Output Unit ~115

Skill Acquisition Determination Unit ~116

Registration Unit ~117

Movement Data ~55

Analyze

Calculate Skill Level

Access

60~ Learning Process Database

Compare

Determine Instruction

70

Movement Data

FIG. 5A

```
                          ┌─────────────┐
                          │    START    │
                          └──────┬──────┘
                                 │
                                 ▼
S101 ──┐  ┌────────────────────────────────────────────────────┐
       └──│         Acquire movement data of target operator    │
          └────────────────────────────────────────────────────┘
                                 │
                                 ▼
S102 ──┐  ┌────────────────────────────────────────────────────┐
       └──│         Calculate skill level of target operator    │
          └────────────────────────────────────────────────────┘
                                 │
                                 ▼
S103 ──┐  ┌────────────────────────────────────────────────────────────────────────┐
       └──│ Acquire movement data of model operator at level slightly higher than or │
          │ equal to level of target operator by accessing learning process database │
          └────────────────────────────────────────────────────────────────────────┘
                                 │
                                 ▼
S104 ──┐  ┌────────────────────────────────────────────────────────────────────────┐
       └──│ Compare movement data of target operator with movement data of model operator │
          └────────────────────────────────────────────────────────────────────────┘
                                 │
                                 ▼
S105 ──┐  ┌────────────────────────────────────────────────────┐
       └──│     Determine instruction as result of comparison   │
          └────────────────────────────────────────────────────┘
                                 │
                                 ▼
                               ( A )
```

FIG. 5B

```
                              ( A )
                                │
                                ▼
  S106 ───┐   ┌─────────────────────────────────────────┐
          │   │   Output information associated with       │
          └──▶│              instruction                    │
              └─────────────────────────────────────────┘
                                │
                                ▼
  S107 ───┐   ┌─────────────────────────────────────────┐
          └──▶│    Acquire movement data for target         │
              │              operator                       │
              └─────────────────────────────────────────┘
                                │
                                ▼
  S108 ───┐   ┌─────────────────────────────────────────┐
          └──▶│ Determine whether or not target operator    │
              │   learned movement in accordance with       │
              │              instruction                    │
              └─────────────────────────────────────────┘
                                │
                                ▼
  S109 ───┐         ◇ Skill Learned? ◇ ──── NO
          └──▶                │
                             YES
                                │
                                ▼
  S110 ───┐   ┌─────────────────────────────────────────┐
          └──▶│  Store movement data mapped to skill level  │
              │        in learning process database          │
              └─────────────────────────────────────────┘
                                │
                                ▼
                           ( END )
```

FIG. 6

Time

WORK STEP

View | Hold | Carry | Adjust

Division into basic operations

FIG. 7

| | Hand | | | Head | | Eyes |
|---|---|---|---|---|---|---|
| | Length of Trajectory | Angle | Force | Length of Trajectory | Angle | Field of Gaze |
| View | *** | *** | *** | *** | *** | *** |
| Hold | *** | *** | *** | *** | *** | *** |
| Carry | *** | *** | *** | *** | *** | *** |
| Adjust | *** | *** | *** | *** | *** | *** |

FIG. 8

<u>60</u>

| Worker = "AAA"   Process = "First Process"   Skill Level = "***"   Learning Period = "50"   Num. of Refs = "35" | | | | | | |
|---|---|---|---|---|---|---|
| | Hand | | | Head | | Eyes |
| | Length of Trajectory | Angle | Force | Length of Trajectory | Angle | Field of Gaze |
| View | *** | *** | *** | *** | *** | *** |
| Hold | *** | *** | *** | *** | *** | *** |
| Carry | *** | *** | *** | *** | *** | *** |
| Adjust | *** | *** | *** | *** | *** | *** |

FIG. 9A

**Worker = "AAA"   Process = "First Process"   Skill Level = "****"**

|  | Hand | | |
|---|---|---|---|
|  | Length of Trajectory | Angle | Force |
| View | *** | *** | *** |
| Hold | *** | *** | *** |
| Carry | *** | *** | 55 |
| Adjust | *** | *** | *** |

**Worker = "BBB"   Process = "First Process"   Skill Level = "****"**

|  | Hand | | |
|---|---|---|---|
|  | Length of Trajectory | Angle | Force |
| View | *** | *** | *** |
| Hold | *** | *** | *** |
| Carry | *** | *** | 45 |
| Adjust | *** | *** | *** |

Average

70

**Process = "First Process"   Skill Level = "****"**

|  | Hand | | |
|---|---|---|---|
|  | Length of Trajectory | Angle | Force |
| View | *** | *** | *** |
| Hold | *** | *** | *** |
| Carry | *** | *** | 50 |
| Adjust | *** | *** | *** |

FIG. 9B

| Worker = "AAA" Process = "First Process" Skill Level = "***" Learning Period="50" | | | |
|---|---|---|---|
| | Hand | | |
| | Length of Trajectory | Angle | Force |
| View | *** | *** | *** |
| Hold | *** | *** | *** |
| Carry | *** | *** | 55 |
| Adjust | *** | *** | *** |

| Worker = "BBB" Process = "First Process" Skill Level = "***" Learning Period="70" | | | |
|---|---|---|---|
| | Hand | | |
| | Length of Trajectory | Angle | Force |
| View | *** | *** | *** |
| Hold | *** | *** | *** |
| Carry | *** | *** | 45 |
| Adjust | *** | *** | *** |

.
.
.

Select skilled operator with shortest learning period ⟹

70

| Worker = "AAA" Process = "First Process" Skill Level = "***" Learning Period="50" | | | |
|---|---|---|---|
| | Hand | | |
| | Length of Trajectory | Angle | Force |
| View | *** | *** | *** |
| Hold | *** | *** | *** |
| Carry | *** | *** | 55 |
| Adjust | *** | *** | *** |

FIG. 9C

55

| | Hand | | |
|---|---|---|---|
| | Length of Trajectory | Angle | Force |
| View | *** | *** | *** |
| Hold | *** | *** | *** |
| Carry | *** | *** | 57 |
| Adjust | *** | *** | *** |

Worker = "AAA"  Process = "First Process"  Skill Level = "****"

| | Hand | | |
|---|---|---|---|
| | Length of Trajectory | Angle | Force |
| View | *** | *** | *** |
| Hold | *** | *** | *** |
| Carry | *** | *** | 55 |
| Adjust | *** | *** | *** |

Select skilled
operator with
highest
similarity

70

Worker = "AAA"  Process = "First Process"  Skill Level = "****"

| | Hand | | |
|---|---|---|---|
| | Length of Trajectory | Angle | Force |
| View | *** | *** | *** |
| Hold | *** | *** | *** |
| Carry | *** | *** | 55 |
| Adjust | *** | *** | *** |

Worker = "BBB"  Process = "First Process"  Skill Level = "****"

| | Hand | | |
|---|---|---|---|
| | Length of Trajectory | Angle | Force |
| View | *** | *** | *** |
| Hold | *** | *** | *** |
| Carry | *** | *** | 45 |
| Adjust | *** | *** | *** |

47

FIG. 9D

Worker = "AAA"   Process = "First Process"   Skill Level = "***"
Num of Refs="35"

| | Hand | | |
| --- | --- | --- | --- |
| | Length of Trajectory | Angle | Force |
| View | *** | *** | *** |
| Hold | *** | *** | *** |
| Carry | *** | *** | 55 |
| Adjust | *** | *** | *** |

Worker = "BBB"   Process = "First Process"   Skill Level = "***"
Num of Refs="5"

| | Hand | | |
| --- | --- | --- | --- |
| | Length of Trajectory | Angle | Force |
| View | *** | *** | *** |
| Hold | *** | *** | *** |
| Carry | *** | *** | 45 |
| Adjust | *** | *** | *** |

Select skilled
operator with
movement
data most
frequently
referenced

70

Worker = "AAA"   Process = "First Process"   Skill Level = "***"
Num of Refs="35"

| | Hand | | |
| --- | --- | --- | --- |
| | Length of Trajectory | Angle | Force |
| View | *** | *** | *** |
| Hold | *** | *** | *** |
| Carry | *** | *** | 55 |
| Adjust | *** | *** | *** |

FIG. 10

65

| | Condition | Instruction |
|---|---|---|
| ***** | NA - NB < (-3) N<br>NA: Force of Target Operator Hand; NB: Force of Model Operator Hand | Add More Power |
| ⋮ | ⋮ | ⋮ |

EP 3 617 815 B1

FIG. 11

15

| Process | Target Operator | Model Operator | Content to Learn | Instruction | Skills Acquisition Status |
|---|---|---|---|---|---|
| First Process | A | AAA | Adjust | Add More Power | 80% |
| ⋮ | ⋮ | ⋮ | ⋮ | ⋮ | ⋮ |

151

152〜 Model Operator Video

153〜 Target Operator Video

50

FIG. 12

Determination
Process
START

S201 — Determine whether or not target operator moves following instruction

S202 — Target operator moved
according to instruction? —— NO

YES

S203 — Count number of clears

S204 — Clears greater than or
equal to predetermined
number? —— NO

YES

S205 — Determine that target operator learned
movement in accordance with instruction

S206 — Determine that target operator has not yet learned
movements in accordance with instruction

Determination
Process
END

FIG. 13

FIG. 14

FIG. 15

Time

Correct: View | Hold | Carry | Adjust

LOW: View | Waste | Hold | View | Carry | Waste | Adjust

STANDARD: View | Hold | Carry | Adjust

HIGH: View | Hold | Carry | Adjust

FIG. 16A

FIG. 16B

Peak Value     HOLD for
             Worker A

Number of
Times

Variance in behavior on each
attempt to perform basic operation

NG (Low Evaluation)

Peak Value     HOLD for
             Worker B

Number of
Times

Stable behavior on each attempt to
perform basic operation

OK (High Evaluation)

FIG. 16C

VIEW => slower than Correct VIEW => NG (Low Evaluation)

VIEW => faster than Correct VIEW => OK (High Evaluation)

VIEW faster than Correct VIEW because of overlaps with
neighboring basic operation => OK (High Evaluation)

FIG. 16D

| | Worker A | | Worker B |
| First Attempt | View | | View |
| Second Attempt | View | | View |
| Third Attempt | View | | View |

Length of time spent on basic operation varies

Length of time spent on basic operation stable

⇩

⇩

NG
(Low Evaluation)

OK
(High Evaluation)

FIG. 17A

| Precision | Types of Sensory Systems Used | | Target | Standard Value |
|---|---|---|---|---|
| mm | 2 Types | | 3 or more | 40 |
| | | | 2 or less | 35 |
| | 1 Type | | 3 or more | 30 |
| | | | 2 or less | 25 |
| cm | 2 Types | | 3 or more | 20 |
| | | | 2 or less | 15 |
| | 1 Type | | 3 or more | 10 |
| | | | 2 or less | 5 |

FIG. 17B

| Precision | Requires Use of Non-Dominant Hand | Requires Use of Tool | Standard Value |
|---|---|---|---|
| mm | Yes | Yes | 40 |
| | | No | 35 |
| | No | Yes | 30 |
| | | No | 25 |
| cm | Yes | Yes | 20 |
| | | No | 15 |
| | No | Yes | 10 |
| | | No | 5 |

**EP 3 617 815 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2409286 A
- JP 2018132556 B
- US 20170061817 A
- JP 2006171184 A
- JP 2013088730 A